# EUROPEAN PATENT APPLICATION

(11) **EP 4 553 919 A1**
(43) Date of publication of application: **14.05.2025**
(21) Application number: 23916688.7
(22) Date of filing: 17.01.2023
(51) Int. Cl.: H01M 4/134, H01M 4/36

(54) **NEGATIVE ELECTRODE SHEET, SECONDARY BATTERY AND ELECTRICAL APPARATUS**

(71) Applicant: Contemporary Amperex Technology (Hong Kong) Limited, Central, Hong Kong (CN)
(72) Inventor: LV, Ruijing, Ningde, Fujian 352100 (CN); SHI, Dongyang, Ningde, Fujian 352100 (CN); LIU, Zhi, Ningde, Fujian 352100 (CN); DENG, Yaqian, Ningde, Fujian 352100 (CN); WANG, Yuzhen, Ningde, Fujian 352100 (CN); JIN, Haizu, Ningde, Fujian 352100 (CN); LI, Baiqing, Ningde, Fujian 352100 (CN)
(74) Representative: Behr, Wolfgang
(86) International application number: PCT/CN2023/072621
(87) International publication number: WO 2024/152198

(57) **Abstract**

The present application provides a negative electrode plate, a secondary battery and an electrical device. The negative electrode plate includes: a negative current collector; and a composite layer arranged on at least one side of the negative current collector. The composite layer includes at least two active material layers and at least one active ion transport layer which are stacked, where the active material layers and the active ion transport layers are arranged alternately; the active ion transport layer is located between two adjacent active material layers; and each active ion transport layer independently includes one of an electron insulating layer and an electron semi-insulating layer.

## Description

### TECHNICAL FIELD

The present application relates to the technical field of electrochemistry, and in particular, to a negative electrode plate, a secondary battery and an electrical device.

### BACKGROUND

In recent years, with the increasingly wide application of secondary batteries represented by lithium-ion batteries, the secondary batteries have been extensively used for hydraulic, thermal, wind and solar power stations and other energy storage power supply systems, and in many fields such as electric tools, electric bicycles, electric motorcycles, electric vehicles, military equipment and aerospace. Due to the great development of the secondary batteries, higher requirements have been put forward for their energy density, cycle performance, charging capability, safety performance, etc. However, current secondary batteries represented by traditional lithium-ion batteries have the problem that the charging capability and safety performance are poor, and cannot meet actual needs in use.

### SUMMARY

The present application aims to provide a negative electrode plate, a secondary battery and an electrical device, such that the charging capability and safety performance of the secondary battery can be improved.

In order to achieve the purpose of the above invention, a first aspect of the present application provides a negative electrode plate. The negative electrode plate includes:
a negative current collector; and
a composite layer arranged on at least one side of the negative current collector, the composite layer including at least two active material layers and at least one active ion transport layer which are stacked, where the active material layers and the active ion transport layers are arranged alternately; the active ion transport layer is located between two adjacent active material layers; and each active ion transport layer independently includes one of an electron insulating layer and an electron semi-insulating layer.

The negative electrode plate provided in the present application includes the negative current collector and the composite layer, where the composite layer includes the active material layers and the active ion transport layer. After the active ion transport layer composed of the electron insulating layer or the electron semi-insulating layer is arranged between the active material layers, the electron insulating layer or the electron semi-insulating layer has the active ion transport property, but has no electron conductivity or lower electron conductivity than that of the active material layers. Therefore, distribution of electrons in the negative electrode plate progressively decreases from the side of the negative current collector to the surface of the negative electrode plate, such that an electric field intensity that gradually decreases from the side close to the negative current collector to the surface of a negative electrode can be formed, so as to form a potential gradient. By regulating the potential gradient, an electron transport network of the negative electrode can be adjusted. After active ions such as lithium-ions reach the surface of the negative electrode, active ions can be induced to intercalate towards the side close to the negative current collector and then sequentially intercalate towards the surface of the negative electrode. In this way, orderly migration and intercalation of active ions in the negative electrode are achieved to reduce accumulation of active ions on the surface of the negative electrode, and prolong the deposition time of metallic lithium and the like on the surface of the negative electrode, thereby improving the charging capability of the secondary battery. In addition, formation of dendrites such as metallic lithium on the surface of the negative electrode is avoided as far as possible, thus improving the safety performance of the secondary battery.

In some implementations of the present application, the active ion transport layer satisfies at least one of the following conditions:
(1) conductivity of the electron insulating layer is σ1, and σ1 satisfies: 0 < σ1 < 10⁻¹⁰ S/cm, and optionally 10⁻¹⁵ S/cm ≤ σ1 ≤ 10⁻¹¹ S/cm; and
(2) conductivity of the electron semi-insulating layer is σ2, and σ2 satisfies: 10⁻¹⁰ S/cm ≤ σ2 ≤ 102 S/cm, and optionally 10⁻⁶ S/cm ≤ σ2 ≤ 10⁻³ S/cm.

The conductivities of the electron insulating layer and the electron semi-insulating layer are within appropriate ranges, such that an active ion transport layer almost having no electron conductivity can be formed. Through cooperation with the active material layers, it is conducive to forming a potential gradient in the negative electrode plate in which the electric field intensity gradually decreases from the side close to the negative current collector to the surface of a negative electrode. This potential gradient can gradually weaken the ability of the negative electrode plate to induce active ions from the side close to the negative current collector to the surface of the negative electrode plate. After active ions such as lithium-ions reach the surface of the negative electrode, active ions can be induced to intercalate towards the side close to the negative current collector and then sequentially intercalate towards the surface of the negative electrode. In this way, orderly migration and intercalation of active ions in the negative electrode are achieved to reduce accumulation of active ions on the surface of the negative electrode, and prolong the deposition time of metallic lithium and the like on the surface of the negative electrode, thereby improving the charging capability of the secondary battery. In addition, formation of dendrites such as metallic lithium is avoided as far as possible, thus improving the safety performance of the secondary battery.

In some implementations of the present application, the negative electrode plate satisfies at least one of the following conditions:
(1) conductivity of the active material layers is σ3, and σ3 satisfies: 10⁻⁶ S/cm ≤ σ3 ≤ 105 S/cm, and optionally 10⁻⁴ S/cm ≤ σ3 ≤10³ S/cm; and
(2) diaphragm resistance of the negative electrode plate is R, and R satisfies: 0.1 mΩ ≤ R ≤ 5000 mΩ, and optionally 1 mΩ ≤ R ≤ 1000 mΩ.

The conductivity of the active material layers and the diaphragm resistance of the negative electrode plate are within appropriate ranges, thereby being conducive to forming a potential gradient in the negative electrode plate in which the electric field intensity gradually decreases from the side close to the negative current collector to the surface of the negative electrode. This potential gradient can gradually weaken the ability of the negative electrode plate to induce active ions from the side close to the negative current collector to the surface of the negative electrode plate. After active ions such as lithium-ions reach the surface of the negative electrode, active ions can be induced to intercalate towards the side close to the negative current collector and then sequentially intercalate towards the surface of the negative electrode. In this way, orderly migration and intercalation of active ions in the negative electrode are achieved to reduce accumulation of active ions on the surface of the negative electrode, and prolong the deposition time of metallic lithium and the like on the surface of the negative electrode, thereby improving the charging capability of the secondary battery. In addition, formation of dendrites such as metallic lithium is avoided as far as possible, thus improving the safety performance of the secondary battery.

In some implementations of the present application, the electron insulating layer contains a first electron insulating material. The first electron insulating material satisfies at least one of the following conditions:
(1) an average diameter of particles of the first electron insulating material is 0.1 µm to 50 µm, and optionally 1 µm to 20 µm; and
(2) a mass proportion of the first electron insulating material in the electron insulating layer is 70% to 100%, and optionally 90% to 99.9%.

Controlling the average diameter of the particles of the first electron insulating material within an appropriate range not only is conducive to diffusion of active ions in the electron insulating layer and improves the charging capability of the battery, but also ensures that the electron insulating layer has a high compaction density.

In some implementations of the present application, the first electron insulating material includes a first solid electrolyte,
optionally, the first solid electrolyte includes a sulfide electrolyte, an oxide electrolyte, a polymer electrolyte or a combination thereof, and
further optionally, the first solid electrolyte includes LLZO, LLZTO, aluminum oxide, polyethylene oxide, lithium sulfide or a combination thereof.

The first solid electrolyte used in the present application can ensure that the electron insulating layer has the active ion transport property and has no electron conductivity to, through combination with the active material layers, form a potential gradient in which the electric field intensity gradually decreases from the side close to the negative current collector to the surface of the negative electrode, so that orderly migration and intercalation of active ions in the negative electrode are achieved, thereby improving the charging capability of the secondary battery.

In some implementations of the present application, the electron semi-insulating layer contains an electron semi-insulating material and/or a composition of a second electron insulating material and a conductive filler. Optionally, the second electron insulating material includes a second solid electrolyte.

The electron semi-insulating material used in the present application can ensure that the electron semi-insulating layer has the active ion transport property and has the electron conductivity which is between almost no electron conductivity and the electron conductivity of the active material layers to, through combination of the electron semi-insulating layer and the active material layers, form a potential gradient in which the electric field intensity gradually decreases from the side close to the negative current collector to the surface of the negative electrode, so that orderly migration and intercalation of active ions in the negative electrode are achieved, thereby improving the charging capability of the secondary battery.

In some implementations of the present application, the electron semi-insulating layer satisfies at least one of the following conditions:
(1) the electron semi-insulating material includes lithium titanate, silicon, sulfur, silicon oxide or a combination thereof;
(2) an average diameter of particles of the electron semi-insulating material is 0.1 µm to 50 µm, and optionally 1 µm to 20 µm;
(3) the second solid electrolyte includes a sulfide electrolyte, an oxide electrolyte, a polymer electrolyte or a combination thereof, and
   optionally, the second solid electrolyte includes LLZO, LLZTO, aluminum oxide, polyethylene oxide, lithium sulfide or a combination thereof;
(4) an average diameter of particles of the second electron insulating material is 0.1 µm to 50 µm, and optionally 1 µm to 20 µm; and
(5) the conductive filler includes super-conductive carbon, acetylene black, carbon black, ketjen black, carbon dots, carbon nanotubes, graphene, carbon nanofibers or a combination thereof, and
optionally, a mass proportion of the conductive filler in the composition is 0.1% to 50%, and optionally 0.5% to 30%.

The second solid electrolyte used in the present application can ensure that the electron insulating layer has the active ion transport property and has no electron conductivity to, through combination of the electron semi-insulating layer and the active material layers, form a potential gradient in which the electric field intensity gradually decreases from the side close to the negative current collector to the surface of the negative electrode, so that orderly migration and intercalation of active ions in the negative electrode are achieved, thereby improving the charging capability of the secondary battery.

In some implementations of the present application, the electron semi-insulating layer contains an electron semi-insulating material, and a mass proportion of the electron semi-insulating material in the electron semi-insulating layer is 70% to 100%, and optionally 90% to 99.9%.

The mass proportion of the electron semi-insulating material in the electron semi-insulating layer is within an appropriate range, such that the conductivity σ2 of the electron semi-insulating layer can be controlled within the aforesaid range provided in the present application, thereby being conducive to forming a potential gradient in the negative electrode plate in which the electric field intensity gradually decreases from the side close to the negative current collector to the surface of the negative electrode. In addition, by regulating the mass proportion of the electron semi-insulating material in the electron semi-insulating layer, regulation of the potential gradient can be achieved. In this way, an electron transport network of the negative electrode is adjusted to achieve orderly migration and intercalation of active ions in the negative electrode, thereby improving the charging capability of the secondary battery.

In some implementations of the present application, the electron semi-insulating layer contains the composition, and a mass proportion of the composition in the electron semi-insulating layer is 70% to 100%, and optionally 90% to 99.9%.

The mass proportion of the composition in the electron semi-insulating layer is within an appropriate range, such that the conductivity σ2 of the electron semi-insulating layer can be controlled within the aforesaid range provided in the present application, thereby being conducive to forming a potential gradient in the negative electrode plate in which the electric field intensity gradually decreases from the side close to the negative current collector to the surface of the negative electrode. In addition, by regulating the mass proportion of the composition in the electron semi-insulating layer, regulation of the potential gradient can be achieved. In this way, the electron transport network of the negative electrode is adjusted to achieve orderly migration and intercalation of active ions in the negative electrode, thereby improving the charging capability of the secondary battery.

In some implementations of the present application, the electron semi-insulating layer contains the electron semi-insulating material and the composition, and a total mass proportion of the electron semi-insulating material and the composition in the electron semi-insulating layer is 70% to 100%, and optionally 90% to 99.9%.

The total mass proportion of the electron semi-insulating material and the composition in the electron semi-insulating layer is within an appropriate range, such that the conductivity σ2 of the electron semi-insulating layer can be controlled within the aforesaid range provided in the present application, thereby being conducive to forming a potential gradient in the negative electrode plate in which the electric field intensity gradually decreases from the side close to the negative current collector to the surface of the negative electrode.

In some implementations of the present application, the active material layer contains a negative active material, and the negative active material satisfies at least one of the following conditions:
(1) the negative active material includes artificial graphite, natural graphite, soft carbon, hard carbon, a silicon-based material, a tin-based material, lithium titanate or a combination thereof, and
   optionally, the silicon-based material includes one or more of elemental silicon, a silicon-oxygen compound, a silicon-carbon compound, a silicon-nitrogen compound and a silicon alloy, and the tin-based material includes elemental tin, a tin-oxygen compound, a tin alloy or a combination thereof; and
(2) an average diameter of particles of the negative active material is 1 µm to 100 µm, and optionally 2 µm to 50 µm.

Controlling the average diameter of the particles of the negative active material within an appropriate range not only is conducive to transport of active ions and reducesa contact area between a negative electrode and an electrolyte solution, thereby improving the charging capability of the battery, but also ensures that the active material layers have a high compaction density.

In some implementations of the present application, the negative electrode plate satisfies at least one of the following conditions:
(1) an average diameter ratio of particles of the first electron insulating material to particles of the negative active material is (1:50) to (50:1), and optionally (1:10) to (10:1);
(2) an average diameter ratio of particles of the second electron insulating material to particles of the negative active material is (1:50) to (50:1), and optionally (1:10) to (10:1); and
(3) an average diameter ratio of particles of the electron semi-insulating material to particles of the negative active material is (1:50) to (50:1), and optionally (1:10) to (10:1).

The average diameter ratio of the particles of the first electron insulating material, the second electron insulating material or the electron semi-insulating material to the particles of the negative active material is controlled within an appropriate range, such that the electron insulating layer or the electron semi-insulating layer located between two adjacent active material layers does not affect the porosity of the lower active material layer.

In some implementations of the present application, the composite layer satisfies at least one of the following conditions:
(1) a coating weight of the active ion transport layer is 0.06 mg/cm2 to 13 mg/cm2, and optionally 0.1 mg/cm2 to 7 mg/cm2; and
(2) a coating weight of the active material layers is 0.06 mg/cm2 to 65 mg/cm2, and optionally 0.13 mg/cm2 to 26 mg/cm2.

In some implementations of the present application, a coating weight ratio of two active material layers located on two opposite sides of the active ion transport layer and adjacent to the active ion transport layer is (1:99) to (99: 1), and optionally (5:90) to (90:5).

The coating weights of the active ion transport layer and the active material layers and the coating weight ratio of the two active material layers are both controlled within appropriate ranges, which not only can form an effective potential gradient, but also does not affect the transport of electrons.

In some implementations of the present application, the composite layer satisfies at least one of the following conditions:
(1) a thickness of the active ion transport layer is 0.2 µm to 50 µm, and optionally 1 µm to 20 µm; and
(2) a thickness of the active material layers is 1 µm to 500 µm, and optionally 10 µm to 300 µm.

The thicknesses of the active ion transport layer and the active material layers are both within appropriate ranges, such that a favorable migration channel can be provided for active ions, which is conducive to transport of active ions. In addition, formation of an effective potential gradient is facilitated to achieve orderly migration and intercalation of active ions in the negative electrode, thereby improving the charging capability of the secondary battery.

In some implementations of the present application, a thickness ratio of the active ion transport layer to the active material layer adjacent to the active ion transport layer is (1:3) to (1:100), and optionally (1:5)to (1:50).

Controlling the thickness ratio of the active ion transport layer to the active material layer adjacent to the active ion transport layer within an appropriate range is conducive to forming an effective potential gradient.

A second aspect of the present application provides a secondary battery. The secondary battery includes the negative electrode plate according to the first aspect of the present application.

**A** third aspect of the present application provides an electrical device. The electrical device includes the secondary battery according to the second aspect of the present application.

The electrical device of the present application includes the secondary battery provided by the present application, and therefore has at least the same advantages as the secondary battery.

One or more embodiments of the present application are detailed in the following drawings and description. The characteristics, purpose and advantages of the present application will become apparent from the description, drawings, and claims.

### BRIEF DESCRIPTION OF DRAWINGS

FIG. 1 is a schematic diagram of a negative electrode plate according to an implementation of the present application.
FIG. 2 is a schematic diagram of a secondary battery according to an implementation of the present application.
FIG. 3 is a schematic exploded view of a secondary battery according to an implementation of the present application.
FIG. 4 is a schematic diagram of a secondary battery according to still another implementation of the present application.
FIG. 5 is a schematic diagram of a secondary battery according to another implementation of the present application.
FIG. 6 is an exploded view of FIG. 5.
FIG. 7 is a schematic diagram of an electrical device that uses a secondary battery as a power supply according to an implementation of the present application.

### DETAILED DESCRIPTION OF EMBODIMENTS

In order to make the purpose, technical solutions and advantages of the present application more clear, the following will clearly and completely describe the technical solutions of the present application in combination with the embodiments. Obviously, the described embodiments are only part of the embodiments of the present application, not all of the embodiments. The relevant embodiments described here are illustrative and are used for providing basic understanding of the present application. The embodiments of the present application should not be explained as limitations to the present application.

For the sake of simplicity, only some numerical ranges are specifically disclosed herein. However, any lower limit can be combined with any upper limit to form an unexpressed range; and any lower limit can be combined with other lower limits to form unexpressed ranges, and similarly, any upper limit can be combined with any other upper limits to form unexpressed ranges. Furthermore, each individually disclosed point or single value can, as a lower or upper limit, be combined with any other points or single values or with other lower or upper limits to form unexpressed ranges.

**In** the description of the present application, unless otherwise specified, a numerical value qualified by "at least" or "at most" includes this numerical value.

Unless otherwise specified, terms used in the present application have generally known meanings as commonly understood by those skilled in the art. Unless otherwise specified, values of parameters mentioned in the present application can be measured by various measurement methods commonly used in the art (e.g., the values can be tested according to methods given in embodiments of the present application).

A list of items linked by using the terms such as "at least one of", "at least one thereof", "at least one type of" or other similar terms may mean any combination of the listed items. For example, if items A and B are listed, the phrases "at least one of A and B" means: A alone; B alone; or both A and B. In another example, if items A, B, and C are listed, the phrases "at least one of A, B, and C" means: A alone; B alone; C alone; A and B (excluding C); A and C (excluding B); B and C (excluding A); or all of A, B, and C. Item A may include a single component or a plurality of components. Item B may include a single component or a plurality of components. Item C may include a single component or a plurality of components.

At present, in order to improve the electron transport performance of a secondary battery, conventional practices usually include adding a conductive agent with high conductivity to a negative electrode of the secondary battery, so as to improve the electron transport performance of the secondary battery by increasing the conductivity of the negative electrode. However, in the process of research, the inventor found that for a negative electrode with high conductivity, when electrons are transported rapidly during a fast charging cycle of the secondary battery, due to a uniform electric field intensity of the negative electrode, a large quantity of lithium-ions and other active ions accumulate on the surface of the negative electrode, are easily reduced to form dendrites such as metallic lithium, and have a risk of piercing a separator, resulting in degradation of the safety performance of the secondary battery.

In order to solve this problem, through extensive research, the inventor elaborately designed a negative electrode plate, including a negative current collector and a composite layer arranged on at least one side of the negative current collector, such that by adjusting design of the composite layer, a potential gradient capable of being regulated can be formed in a negative electrode. By regulating the potential gradient, an electron transport network of the negative electrode can be adjusted to induce active ions such as lithium-ions to intercalate on the side close to the negative current collector and then sequentially intercalate towards the surface of the negative electrode, so as to prolong the plating time of metallic lithium and the like on the surface of the negative electrode, thereby improving the charging capability and safety performance of the secondary battery.

### Negative electrode plate

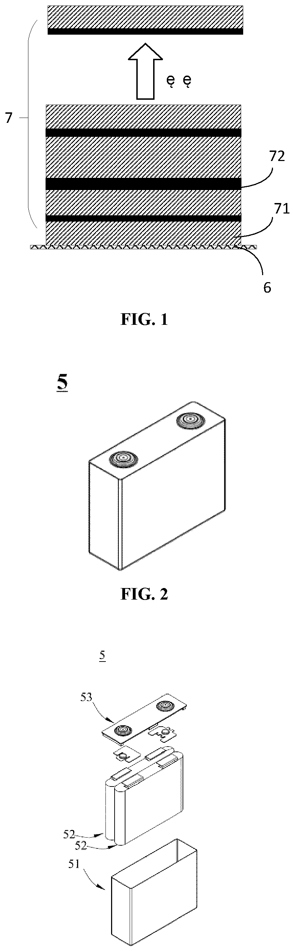

A first aspect of an implementation of the present application provides a negative electrode plate, as shown in FIG. 1, the negative electrode plate includes: a negative current collector 6; and a composite layer 7 arranged on at least one side of the negative current collector, the composite layer 7 includes at least two active material layers 71 and at least one active ion transport layer 72 which are stacked, where the active material layers 71 and the active ion transport layers 72 are arranged alternately; the active ion transport layer 72 is located between two adjacent active material layers 71; and each active ion transport layer 72 independently includes one of an electron insulating layer and an electron semi-insulating layer.

It can be understood that "active ions" described in the present application refer to ions such as lithium-ions that intercalate and deintercalate back and forth between two electrodes of a secondary battery to ensure normal operation of the secondary battery.

It can be understood that "electron insulating" described in the present application refers to having the active ion transport property but no electron conductivity; and "electron semi-insulating" refers to having both the active ion transport property and electron conductivity, in which, however, the electron conductivity is between no electron conductivity and the electron conductivity of the active material layers.

The negative electrode plate provided in the present application includes the negative current collector and the composite layer, where the composite layer includes the active material layers and the active ion transport layer. Without intending to be bound by any theory, the inventor found that after the active ion transport layer composed of the electron insulating layer or the electron semi-insulating layer is arranged between the active material layers, the electron insulating layer or the electron semi-insulating layer has the active ion transport property, but has no electron conductivity or lower electron conductivity than that of the active material layers. Therefore, distribution of electrons in the negative electrode plate progressively decreases from the side of the negative current collector to the surface of the negative electrode plate, such that an electric field intensity that gradually decreases from the side close to the negative current collector to the surface of a negative electrode can be formed, so as to form a potential gradient. This potential gradient can gradually weaken the ability of the negative electrode plate to induce active ions from the side close to the negative current collector to the surface of the negative electrode plate. By regulating the potential gradient, an electron transport network of the negative electrode can be adjusted. After active ions such as lithium-ions reach the surface of the negative electrode, active ions can be induced to intercalate towards the side close to the negative current collector and then sequentially intercalate towards the surface of the negative electrode. In this way, orderly migration and intercalation of active ions in the negative electrode are achieved to reduce accumulation of active ions on the surface of the negative electrode, and prolong the plating time of metallic lithium and the like on the surface of the negative electrode, thereby improving the charging capability of the secondary battery. In addition, formation of dendrites such as metallic lithium on the surface of the negative electrode is avoided as far as possible, thus improving the safety performance of the secondary battery.

It can be understood that in the composite layer of the present application, only one active ion transport layer may be arranged, or a plurality of active ion transport layers may be arranged. When a plurality of active ion transport layers are arranged in the composite layer, two active ion transport layers adjacent to any one active material layer may be the same or different. For example, the two active ion transport layers may both be electron insulating layers, both be electron semi-insulating layers, or respectively be an electron insulating layer and an electron semi-insulating layer. In addition, when a plurality of active ion transport layers are arranged in the composite layer, with consideration of a manufacturing procedure and a bonding force, the number of active ion transport layers arranged may preferably be two.

In some implementations, the conductivity of the electron insulating layer is σ1, and σ1 satisfies: 0< σ1 < 10⁻¹⁰ S/cm. For example, σ1 may satisfy: 0 < σ1 ≤ 10⁻³⁰ S/cm, 0 < σ1 ≤ 10⁻²⁵ S/cm, 0 < σ1 ≤ 10⁻²⁰ S/cm, 0 < σ1 ≤ 10⁻¹⁵ S/cm, 0 < σ1 ≤ 10⁻¹¹ S/cm, 10⁻³⁰ S/cm ≤ σ1 ≤ 10⁻¹¹ S/cm, 10⁻²⁵ S/cm ≤ σ1 ≤ 10⁻¹¹ S/cm, 10⁻²⁰ S/cm ≤ σ1 ≤ 10⁻¹¹ S/cm, 10⁻¹⁵ S/cm ≤ σ1 ≤ 10⁻¹¹ S/cm, 10⁻³⁰ S/cm ≤ σ1 ≤ 10⁻¹⁵ S/cm, 10⁻²⁵ S/cm ≤ σ1 ≤ 10⁻¹⁵ S/cm, 10⁻²⁰ S/cm ≤σ1 ≤ 10⁻¹⁵ S/cm or 10⁻³⁰ S/cm ≤ σ1 ≤ 10⁻²⁰ S/cm. Optionally, σ1 satisfies: 10⁻¹⁵ S/cm ≤ σ1 ≤ 10⁻¹¹ S/cm. The conductivity of the electron insulating layer is within an appropriate range, such that an active ion transport layer having no electron conductivity can be formed. Through cooperation with the active material layers, it is conducive to forming a potential gradient in the negative electrode plate in which the electric field intensity gradually decreases from the side close to the negative current collector to the surface of the negative electrode. This potential gradient can gradually weaken the ability of the negative electrode plate to induce active ions from the side close to the negative current collector to the surface of the negative electrode plate. After active ions such as lithium-ions reach the surface of the negative electrode, active ions can be induced to intercalate towards the side close to the negative current collector and then sequentially intercalate towards the surface of the negative electrode. In this way, orderly migration and intercalation of active ions in the negative electrode are achieved to reduce accumulation of active ions on the surface of the negative electrode, and prolong the plating time of metallic lithium and the like on the surface of the negative electrode, thereby improving the charging capability of the secondary battery. In addition, formation of dendrites such as metallic lithium is avoided as far as possible, thus improving the safety performance of the secondary battery.

In some embodiments, the conductivity of the electron semi-insulating layer is σ2, and σ2 satisfies: 10⁻¹⁰ S/cm ≤ σ2 ≤ 10² S/cm. For example, σ2 may satisfy: 10⁻⁹ S/cm ≤ σ2 ≤ 10² S/cm, 10⁻⁸ S/cm ≤ σ2 ≤ 10² S/cm, 10⁻⁶ S/cm ≤ σ2 ≤ 10² S/cm, 10⁻⁵ S/cm ≤ σ2 ≤ 10² S/cm, 10⁻⁴ S/cm ≤ σ2 ≤ 10² S/cm, 10⁻³ S/cm ≤ σ2 ≤ 10² S/cm, 10⁻² S/cm ≤ σ2 ≤ 10² S/cm, 10⁻¹ S/cm ≤ σ2 ≤ 10² S/cm, 1 S/cm ≤ σ2 ≤ 10² S/cm, 10 S/cm ≤ σ2 ≤ 10² S/cm, 10⁻¹⁰ S/cm ≤ σ2 ≤ 10 S/cm, 10⁻⁹ S/cm ≤ σ2 ≤ 10 S/cm, 10⁻⁸ S/cm ≤ σ2 ≤ 10 S/cm, 10⁻⁷ S/cm ≤ σ2 ≤ 10 S/cm, 10⁻⁶ S/cm ≤ σ2 ≤ 10 S/cm, 10⁻⁵ S/cm ≤ σ2 ≤ 10 S/cm, 10⁻⁴ S/cm ≤ σ2 ≤ 10 S/cm, 10⁻³ S/cm ≤ σ2 ≤ 10 S/cm, 10⁻² S/cm ≤ σ2 ≤ 10 S/cm, 10⁻¹ S/cm ≤ σ2 ≤ 10 S/cm, 1 S/cm ≤ σ2 ≤ 10 S/cm, 10⁻¹⁰ S/cm ≤ σ2 ≤ 10⁻¹ S/cm, 10⁻⁹ S/cm ≤ σ2 ≤ 10⁻¹ S/cm, 10⁻⁸ S/cm ≤ σ2 ≤ 10⁻¹ S/cm, 10⁻⁷ S/cm ≤ σ2 ≤ 10⁻¹ S/cm, 10⁻⁶ S/cm ≤ σ2 ≤ 10⁻¹ S/cm, 10⁻⁵ S/cm ≤ σ2 ≤ 10⁻¹ S/cm, 10⁻⁴ S/cm ≤ σ2 ≤ 10⁻¹ S/cm, 10⁻³ S/cm ≤ σ2 ≤ 10⁻¹ S/cm or 10⁻² S/cm ≤ σ2 ≤ 10⁻¹ S/cm. Optionally, σ2 satisfies: 10⁻⁶ S/cm ≤ σ2 ≤ 10⁻³ S/cm.

The conductivity of the electron semi-insulating layer is within an appropriate range, such that the electron conductivity of the active ion transport layer is between no electron conductivity and the electron conductivity of the active material layer. Through cooperation with the active material layers, it is conducive to forming a potential gradient in the negative electrode plate in which the electric field intensity gradually decreases from the side close to the negative current collector to the surface of the negative electrode. This potential gradient can gradually weaken the ability of the negative electrode plate to induce active ions from the side close to the negative current collector to the surface of the negative electrode plate. After active ions such as lithium-ions reach the surface of the negative electrode, active ions can be induced to intercalate towards the side close to the negative current collector and then sequentially intercalate towards the surface of the negative electrode. In this way, orderly migration and intercalation of active ions in the negative electrode are achieved to reduce accumulation of active ions on the surface of the negative electrode, and prolong the plating time of metallic lithium and the like on the surface of the negative electrode, thereby improving the charging capability of the secondary battery. In addition, formation of dendrites such as metallic lithium is avoided as far as possible, thus improving the safety performance of the secondary battery.

In some implementations, the conductivity of the active material layer is σ3, and σ3 satisfies: 10⁻⁶ S/cm ≤ σ3 ≤ 10⁵ S/cm. For example, σ3 may satisfy: 10⁻⁵ S/cm ≤ σ3 ≤ 10⁵ S/cm, 10⁻⁴ S/cm ≤ σ3 ≤ 10⁵ S/cm, 10-3S/cm ≤ σ3 ≤ 10⁵ S/cm, 10⁻² S/cm ≤ σ3 ≤ 10⁵ S/cm, 10⁻¹ S/cm ≤ σ3 ≤ 10⁵ S/cm, 1 S/cm ≤ σ3 ≤ 10⁵ S/cm, 10 S/cm ≤ σ3 ≤ 10⁵ S/cm, 102 S/cm ≤ σ3 ≤ 10⁵ S/cm, 10³ S/cm ≤ σ3 ≤ 10⁵ S/cm, 104 S/cm ≤ σ3 ≤ 10⁵ S/cm, 10⁻⁵ S/cm ≤ σ3 ≤ 104 S/cm, 10⁻⁵ S/cm≤ σ3 ≤ 10³ S/cm, 10⁻⁵ S/cm ≤ σ3 ≤ 102 S/cm, 10⁻⁵ S/cm ≤ σ3 ≤ 10 S/cm, 10⁻⁵ S/cm ≤ σ3 ≤ 1 S/cm, 10⁻⁵ S/cm ≤ σ3 ≤ 10⁻¹ S/cm, 10⁻⁵ S/cm ≤ σ3 ≤ 10⁻² S/cm, 10⁻⁵ S/cm ≤ σ3 ≤ 10⁻³ S/cm or 10⁻⁵ S/cm ≤ σ3 ≤ 10⁻⁴ S/cm. Optionally, σ3 satisfies: 10-4S/cm ≤ σ3 ≤ 10³ S/cm.

The conductivity of the active material layers is within an appropriate range, thereby, through cooperation with the active ion transport layer, forming a potential gradient in the negative electrode plate in which the electric field intensity gradually decreases from the side close to the negative current collector to the surface of the negative electrode. This potential gradient can gradually weaken the ability of the negative electrode plate to induce active ions from the side close to the negative current collector to the surface of the negative electrode plate. After active ions such as lithium-ions reach the surface of the negative electrode, active ions can be induced to intercalate towards the side close to the negative current collector and then sequentially intercalate towards the surface of the negative electrode. In this way, orderly migration and intercalation of active ions in the negative electrode are achieved to reduce accumulation of active ions on the surface of the negative electrode, and prolong the plating time of metallic lithium and the like on the surface of the negative electrode, thereby improving the charging capability of the secondary battery. In addition, formation of dendrites such as metallic lithium is avoided as far as possible, thus improving the safety performance of the secondary battery.

In some implementations, the diaphragm resistance of the negative electrode plate is R, and R satisfies: 0.1 mΩ ≤ R ≤ 5000 mΩ. For example, R may be 0.5 mΩ, 1 mΩ, 5 mΩ, 10 mΩ, 25 mΩ, 50 mΩ, 100 mΩ, 250 mΩ, 500 mΩ, 750 mΩ, 1000 mΩ, 1500 mΩ, 2000 mΩ, 2500 mΩ, 3000 mΩ, 3500 mΩ, 4000 mΩ, 4500 Ω or a value falling within a range formed by any two of these values. Optionally, R satisfies: 1 mΩ ≤ R ≤ 1000 mΩ. The diaphragm resistance of the negative electrode plate is within an appropriate range, and

the diaphragm resistance of the negative electrode plate has a meaning generally known in the art, and can be determined by using instruments and methods generally known in the art. For example, several negative electrode plate samples with an area of 154.02 mm² can be die-cut, and the average diaphragm resistance value of 10 parallel samples is tested by using a diaphragm resistance tester, such as an BER1300 tester from Initial Energy Science & Technology (IEST), and is taken as the diaphragm resistance value of the negative electrode plate.

The diaphragm resistance of the negative electrode plate is within an appropriate range, which is conducive to forming a potential gradient in the negative electrode plate in which the electric field intensity gradually decreases from the side close to the negative current collector to the surface of the negative electrode. This potential gradient can gradually weaken the ability of the negative electrode plate to induce active ions from the side close to the negative current collector to the surface of the negative electrode plate. After active ions such as lithium-ions reach the surface of the negative electrode, active ions can be induced to intercalate towards the side close to the negative current collector and then sequentially intercalate towards the surface of the negative electrode. In this way, orderly migration and intercalation of active ions in the negative electrode are achieved to reduce accumulation of active ions on the surface of the negative electrode, and prolong the deposition time of metallic lithium and the like on the surface of the negative electrode, thereby improving the charging capability of the secondary battery. In addition, formation of dendrites such as metallic lithium is avoided as far as possible, thus improving the safety performance of the secondary battery.

In some implementations, the electron insulating layer contains a first electron insulating material. The first electron insulating material includes a first solid electrolyte, which may include but is not limited to one or more of a sulfide electrolyte, an oxide electrolyte and a polymer electrolyte.

In some embodiments, the first solid electrolyte may include but is not limited to one or more of LLZO, LLZTO, aluminum oxide, polyethylene oxide and lithium sulfide. The first solid electrolyte used in the present application can ensure that the electron insulating layer has the active ion transport property and has no electron conductivity to, through combination with the active material layers, form a potential gradient in which the electric field intensity gradually decreases from the side close to the negative current collector to the surface of the negative electrode, so that orderly migration and intercalation of active ions in the negative electrode are achieved, thereby improving the charging capability of the secondary battery.

It should be noted that in the present application, LLZO represents a garnet-type solid electrolyte Li₇La₃Zr₂O₁₂, while LLZTO represents Ta-doped LLZO.

In some implementations, the mass proportion of the first electron insulating material in the electron insulating layer is 70% to 100%. For example, the mass proportion of the first electron insulating material in the electron insulating layer may be 75%, 80%, 85%, 90%, 95%, 99% or a value falling within a range formed by any two of these values. Optionally, the mass proportion of the first electron insulating material in the electron insulating layer is 90% to 99.9%.

The mass proportion of the first electron insulating material in the electron insulating layer is within an appropriate range, such that the conductivity σ1 of the electron insulating layer can be controlled within the aforesaid range provided in the present application, thereby being conducive to forming a potential gradient in the negative electrode plate in which the electric field intensity gradually decreases from the side close to the negative current collector to the surface of the negative electrode. In addition, by regulating the mass proportion of the first electron insulating material in the electron insulating layer, the conductivity σ1 of the electron insulating layer can be regulated, such that regulation of the potential gradient can be achieved. In this way, the electron transport network of the negative electrode is adjusted to achieve orderly migration and intercalation of active ions in the negative electrode, thereby improving the charging capability of the secondary battery.

It should be noted that, in addition to the first electron insulating material, the electron insulating layer of the present application further optionally contains a binder to enhance a bonding force between the electron insulating layer and the active material layers. The binder may be a conventional binder, which may include but is not limited to one or more of polyvinylidene fluoride (PVDF), polytetrafluoroethylene (PTFE), a vinylidene fluoride-tetrafluoroethylene-propylene terpolymer, a polyvinylidene fluoride-hexafluoropropylene-tetrafluoroethylene ternary copolymer, a tetrafluoroethylene-hexafluoropropylene copolymer and fluorine-containing acrylate resin.

The average diameter of particles of the first electron insulating material is 0.1 µm to 50 µm. For example, the average diameter of the particles of the first electron insulating material may be 0.5 µm, 1 µm, 5 µm, 10 µm, 20 µm, 30 µm, 40 µm or a value falling within a range formed by any two of these values. Optionally, the average diameter of the particles of the first electron insulating material is 1 µm to 20 µm. Controlling the average diameter of the particles of the first electron insulating material within an appropriate range not only is conducive to diffusion of active ions in the electron insulating layer and improves the charging capability of the battery, but also ensures that the electron insulating layer has a high compaction density.

In some implementations, the electron semi-insulating layer contains an electron semi-insulating material and/or a composition of a second electron insulating material and a conductive filler.

It can be understood that the electron semi-insulating material may contain only the electron semi-insulating material, only the composition of the second electron insulating material and the conductive filler, or both the electron semi-insulating material and the composition of the second electron insulating material and the conductive filler.

In some embodiments, the electron semi-insulating material is not particularly limited as long as it has the active ion transport property and has electron conductivity that is between no electron conductivity and the electron conductivity of the active material layers. For example, the electron semi-insulating material may include but is not limited to one or more of lithium titanate (LTO), silicon, sulfur and silicon oxide (SiOx). The electron semi-insulating material used in the present application can ensure that the electron semi-insulating layer has the active ion transport property and has the electron conductivity which is between no electron conductivity and the electron conductivity of the active material layer to, through combination of the electron semi-insulating layer and the active material layers, form a potential gradient in which the electric field intensity gradually decreases from the side close to the negative current collector to the surface of the negative electrode is formed, and orderly migration and intercalation of active ions in the negative electrode are achieved, thereby improving the charging capability of the secondary battery.

In some implementations, the average diameter of particles of the electron semi-insulating material is 0.1 µm to 50 µm. For example, the average diameter of the particles of the electron semi-insulating material may be 0.5 µm, 1 µm, 5 µm, 10 µm, 20 µm, 30 µm, 40 µm or a value falling within a range formed by any two of these values. Optionally, the average diameter of the particles of the electron semi-insulating material is 1 µm to 20 µm. Controlling the average diameter of the particles of the electron semi-insulating material within an appropriate range not only is conducive to diffusion of active ions in the electron semi-insulating layer and improves the charging capability of the battery, but also ensures that the electron semi-insulating layer has a high compaction density.

In some implementations, when the electron semi-insulating layer contains only the electron semi-insulating material, the mass proportion of the electron semi-insulating material in the electron semi-insulating layer is 70% to 100%. For example, the mass proportion of the electron semi-insulating material in the electron semi-insulating layer may be 75%, 80%, 85%, 90%, 95%, 99% or a value falling within a range formed by any two of these values. Optionally, the mass proportion of the electron semi-insulating material in the electron semi-insulating layer is 90% to 99.9%.

When the electron semi-insulating layer contains only the electron semi-insulating material, the mass proportion of the electron semi-insulating material in the electron semi-insulating layer is within an appropriate range, such that the conductivity σ2 of the electron semi-insulating layer can be controlled within the aforesaid range provided in the present application, thereby being conducive to forming a potential gradient in the negative electrode plate in which the electric field intensity gradually decreases from the side close to the negative current collector to the surface of the negative electrode. In addition, by regulating the mass proportion of the electron semi-insulating material in the electron semi-insulating layer, the conductivity σ2 of the electron semi-insulating layer can be regulated, such that regulation of the potential gradient can be achieved. In this way, the electron transport network of the negative electrode is adjusted to achieve orderly migration and intercalation of active ions in the negative electrode, thereby improving the charging capability of the secondary battery.

In some implementations, the second electron insulating material may include a second solid electrolyte. The second solid electrolyte may include but is not limited to one or more of a sulfide electrolyte, an oxide electrolyte and a polymer electrolyte.

In some embodiments, the second solid electrolyte may include but is not limited to one or more of LLZO, LLZTO, aluminum oxide, ethylene oxide and lithium sulfide. The second solid electrolyte used in the present application can ensure that the electron semi-insulating layer has the active ion transport property and has no electron conductivity to, through combination of the electron semi-insulating layer and the active material layers, form a potential gradient in which the electric field intensity gradually decreases from the side close to the negative current collector to the surface of the negative electrode, so that orderly migration and intercalation of active ions in the negative electrode are achieved, thereby improving the charging capability of the secondary battery.

In some implementations, when the electron semi-insulating layer contains only the composition of the second electron insulating material and the conductive filler, the mass proportion of the composition in the electron semi-insulating layer is 70% to 100%. For example, the mass proportion of the composition in the electron semi-insulating layer may be 75%, 80%, 85%, 90%, 95%, 99% or a value falling within a range formed by any two of these values. Optionally, the mass proportion of the composition in the electron semi-insulating layer is 90% to 99.9%.

When the electron semi-insulating layer contains only the composition of the second electron insulating material and the conductive filler, the mass proportion of the composition in the electron semi-insulating layer is within an appropriate range, such that the conductivity σ2 of the electron semi-insulating layer can be controlled within the aforesaid range provided in the present application, thereby being conducive to forming a potential gradient in the negative electrode plate uin which the electric field intensity gradually decreases from the side close to the negative current collector to the surface of the negative electrode. In addition, by regulating the mass proportion of the composition in the electron semi-insulating layer, the conductivity σ2 of the electron semi-insulating layer can be regulated, such that regulation of the potential gradient can be achieved. In this way, the electron transport network of the negative electrode is adjusted to achieve orderly migration and intercalation of active ions in the negative electrode, thereby improving the charging capability of the secondary battery.

In some implementations, the average diameter of particles of the second electron insulating material in the composition is 0.1 µm to 50 µm. For example, the average diameter of the particles of the second electron insulating material in the composition may be 0.5 µm, 1 µm, 5 µm, 10 µm, 20 µm, 30 µm, 40 µm or a value falling within a range formed by any two of these values. Optionally, the average diameter of the particles of the second electron insulating material in the composition is 1 µm to 20 µm. Controlling the average diameter of the particles of the second electron insulating material within an appropriate range not only is conducive to diffusion of active ions in the electron semi-insulating layer and improves the charging capability of the battery, but also ensures that the electron semi-insulating layer has a high compaction density.

In some implementations, when the electron semi-insulating layer contains both the electron semi-insulating material and the composition of the second electron insulating material and the conductive filler, and the total mass proportion of the electron semi-insulating material and the composition in the electron semi-insulating layer is 70% to 100%. For example, the total mass proportion of the electron semi-insulating material and the composition in the electron semi-insulating layer may be 75%, 80%, 85%, 90%, 95%, 99% or a value falling within a range formed by any two of these values. Optionally, the total mass proportion of the electron semi-insulating material and the composition in the electron semi-insulating layer is 90% to 99.9%.

When the electron semi-insulating layer contains both the electron semi-insulating material and the composition of the second electron insulating material and the conductive filler, the total mass proportion of the electron semi-insulating material and the composition in the electron semi-insulating layer is within an appropriate range, such that the conductivity σ2 of the electron semi-insulating layer can be controlled within the aforesaid range provided in the present application, thereby being conducive to forming a potential gradient in the negative electrode plate in which the electric field intensity gradually decreases from the side close to the negative current collector to the surface of the negative electrode. In addition, by regulating the total mass proportion of the electron semi-insulating material and the composition in the electron semi-insulating layer, the conductivity σ2 of the electron semi-insulating layer can be regulated, such that regulation of the potential gradient can be achieved. In this way, the electron transport network of the negative electrode is adjusted to achieve orderly migration and intercalation of active ions in the negative electrode, thereby improving the charging capability of the secondary battery.

In some implementations, the conductive filler may be a conventional conductive agent in the art. For example, the conductive filler may include but is not limited to one or more of super-conductive carbon, acetylene black, carbon black, ketjen black, carbon dots, carbon nanotubes, graphene and carbon nanofibers.

In some implementations, the mass proportion of the conductive filler in the composition is 0.1% to 50%. For example, the mass proportion of the conductive filler in the composition may be 0.5%, 1%, 5%, 10%, 20%, 30%, 40% or a value falling within a range formed by any two of these values. Optionally, the mass proportion of the conductive filler in the composition is 0.5% to 30%. The mass proportion of the conductive filler in the composition is within an appropriate range, such that the electron conductivity of the composition can be regulated, and the conductivity σ2 of the electron semi-insulating layer is controlled within the aforesaid range provided in the present application, thereby being conducive to forming a potential gradient in the negative electrode plate in which the electric field intensity gradually decreases from the side close to the negative current collector to the surface of the negative electrode, and the regulation of the potential gradient can be achieved. In this way, the electron transport network of the negative electrode is adjusted to achieve orderly migration and intercalation of active ions in the negative electrode, thereby improving the charging capability of the secondary battery.

In some implementations, the active material layer contains a negative active material. A generally known negative active material for a secondary battery in the art can be used as the negative active material. As an example, the negative active material may include at least one of the following materials: artificial graphite, natural graphite, soft carbon, hard carbon, a silicon-based material, a tin-based material, lithium titanate, etc. The silicon-based material may be selected from at least one of elemental silicon, a silicon-oxygen compound, a silicon-carbon compound, a silicon-nitrogen compound and a silicon alloy. The tin-based material may be selected from at least one of elemental tin, a tin-oxygen compound and a tin alloy. However, the present application is not limited to these materials, and other traditional materials capable of being used as negative active materials for batteries may also be used. One of these negative active materials may be used alone, or two or more thereof may be used in combination.

Optionally, the negative active material may include but is not limited to one or more of artificial graphite, natural graphite, soft carbon, hard carbon, a silicon-based material, a tin-based material and lithium titanate. Further optionally, the silicon-based material includes one or more of elemental silicon, a silicon-oxygen compound, a silicon-carbon compound, a silicon-nitrogen compound and a silicon alloy, and the tin-based material includes one or more of elemental tin, a tin-oxygen compound and a tin alloy.

In some implementations, the average diameter of particles of the negative active material is 1 µm to 100 µm. For example, the average diameter of the particles of the negative active material may be 5 µm, 10 µm, 20 µm, 30 µm, 40 µm, 50 µm, 60 µm, 70 µm, 80 µm, 90 µm or a value falling within a range formed by any two of these values. Optionally, the average diameter of the particles of the negative active material is 2 µm to 50 µm. Controlling the average diameter of the particles of the negative active material within an appropriate range not only is conducive to transport of active ions and reduces a contact area between the negative electrode and an electrolyte solution, thereby improving the charging capability of the battery, but also ensures that the active material layers have a high compaction density.

In the present application, the average diameter of the particles of the negative active material, the average diameter of the particles of the first electron insulating material, the average diameter of the particles of the electron semi-insulating material and the average diameter of the particles of the second electron insulating material all have meanings generally known in the art, and can be determined by using instruments and methods generally known in the art. For example, with reference to GB/T 19077-2016 Particle Size Analysis -- Laser Diffraction Methods, the determination can be conveniently performed by using a laser particle size analyzer, such as a Mastersizer 2000E laser particle size analyzer from Malvern Instruments Ltd., UK.

In some implementations, the average diameter ratio of the particles of the first electron insulating material to the particles of the negative active material is (1:50) to (50:1). For example, the average diameter ratio of the particles of the first electron insulating material to the particles of the negative active material may be 1:40, 1:30, 1:20, 1:10, 1:1, 5:1, 10:1, 20:1, 30:1, 40:1 or a value falling within a range formed by any two of these values. Optionally, the average diameter ratio of the particles of the first electron insulating material to the particles of the negative active material is (1:10) to (10:1).

In some implementations, the average diameter ratio of the particles of the second electron insulating material to the particles of the negative active material is (1:50) to (50:1). For example, the average diameter ratio of the particles of the second electron insulating material to the particles of the negative active material may be 1:40, 1:30, 1:20, 1:10, 1:1, 5:1, 10:1, 20:1, 30:1, 40:1 or a value falling within a range formed by any two of these values. Optionally, the average diameter ratio of the particles of the second electron insulating material to the particles of the negative active material is (1:10) to (10:1).

In some implementations, the average diameter ratio of the particles of the electron semi-insulating material to the particles of the negative active material is (1:50) to (50:1). For example, the average diameter ratio of particles of the electron semi-insulating material to particles of the negative active material may be 1:40, 1:30, 1:20, 1:10, 1:1, 5:1, 10:1, 20:1, 30:1, 40:1 or a value falling within a range formed by any two of these values. Optionally, the average diameter ratio of the particles of the electron semi-insulating material to the particles of the negative active material is (1:10) to (10:1).

In the present application, the average diameter ratio of the particles of the first electron insulating material, the second electron insulating material or the electron semi-insulating material to the particles of the negative active material is controlled within the corresponding range described above in order to ensure that the electron insulating layer or the electron semi-insulating layer located between two adjacent active material layers does not affect the porosity of the lower active material layer. If the average diameter ratio of the particles is relatively small, particles of the electron insulating layer or the electron semi-insulating layer located in the middle may penetrate into the lower active material layer and fill pores of the lower active material layer, and thus infiltration of an electrolyte solution into an active material and transport of active ions may be affected. If the average diameter ratio of the particles is relatively large, the overall compaction density of the negative electrode may be affected.

In some implementations, the coating weight of the active ion transport layer is 0.06 mg/cm² to 13 mg/cm². For example, the coating weight of the active ion transport layer may be 0.1 mg/cm², 0.5 mg/cm², 1 mg/cm², 5 mg/cm², 10 mg/cm², 12 mg/cm² or a value falling within a range formed by any two of these values. Optionally, the coating weight of the active ion transport layer is 0.1 mg/cm² to 7 mg/cm².

In some implementations, the coating weight of the active material layer is 0.06 mg/cm² to 65 mg/cm². For example, the coating weight of the active material layer may be 0.1 mg/cm², 0.5 mg/cm², 1 mg/cm², 5 mg/cm², 10 mg/cm², 20 mg/cm², 30 mg/cm², 40 mg/cm², 50 mg/cm², 60 mg/cm² or a value falling within a range formed by any two of these values. Optionally, the coating weight of the active material layer is 0.13 mg/cm² to 26 mg/cm².

The coating weight of the active material layer has a meaning generally known in the art, and can be tested by methods known in the art. For example, a dried negative electrode plate coated with an active material is cut into 5 pieces with an equal area, for each piece, the thickness of the negative electrode plate is measured by using a ten-thousandth micrometer and denoted as d0 cm, an active material layer in the negative electrode plate is scraped off with a scraper, the mass of the active material layer is weighed on a balance and denoted as m (mg), and then the coating weight of the active material layer can be obtained from m/d0.

In some implementations, the coating weight ratio of the upper and lower active material layers located on two opposite sides of the active ion transport layer and adjacent to the active ion transport layer is (1:99) to (99:1). For example, the coating weight ratio of the upper and lower active material layers may be 1:90, 1:80, 1:70, 1:60, 1:50, 1:40, 1:30, 1:10, 1:20, 1:5, 1:1, 5:1, 10:1, 20:1, 30:1, 40:1, 50:1, 60:1, 70:1, 80:1, 90:1 or a value falling within a range formed by any two of these values. Optionally, the coating weight ratio of the upper and lower active material layers is (5:90) to (90:5).

In the present application, range control of the coating weight ratio of the upper and lower active material layers is designed on the basis of potential distribution of the negative electrode plate in the present application. For instance, when the composite layer in the negative electrode plate has three layers (i.e., the composite layer includes two active material layers and one active ion transport layer, and the active ion transport layer is located between the two active material layers), if the coating weight ratio of the upper and lower active material layers is relatively high, electron transport of the upper active material layer may be affected, which possibly increases the charge transfer resistance, slows down an electrochemical kinetic process, causes low electron conductivity of the electrode plate on the side close to the electrolyte solution, and increases electrons involved in charge transfer, and thus the kinetic process may be slow during fast charging. If the coating weight ratio of the upper and lower active material layers is relatively low, electron conductivity of the upper active material layer may change slightly, and thus the effect that active ions such as lithium-ions are induced by the potential gradient to migrate from a surface layer of the negative electrode plate to the interior thereof may not be achieved.

In some implementations, the thickness of the active ion transport layer is 0.2 µm to 50 m. For example, the thickness of the active ion transport layer may be 0.5 µm, 1 µm, 5 µm, 10 m, 15 µm, 20 µm, 25 µm, 30 µm, 35 µm, 40 µm, 45 µm, 50 µm or a value falling within a range formed by any two of these values. Optionally, the thickness of the active ion transport layer is 1 µm to 20 µm.

The thickness of the active ion transport layer refers to the thickness of the active ion transport layer after cold pressing treatment, also includes the actually measured thickness after the electrode plate is installed into the battery and subjected to a charge-discharge cycle, and can be tested by methods known in the art. For example, the test can be performed by using a ten-thousandth micrometer (such as Mitutoyo 293-100, with an accuracy of 0.1 µm).

In some implementations, the thickness of the active material layers is 1 µm to 500 µm. For example, the thickness of the active material layers may be 1 µm, 5 µm, 10 µm, 25 µm, 50 m, 75 µm, 100 µm, 150 µm, 200 µm, 250 µm, 300 µm, 350 µm, 400 µm, 450 µm, 500 µm or a value falling within a range formed by any two of these values. Optionally, the thickness of the active material layers is 10 µm to 300 µm.

The thickness of the active material layers refers to the thickness of the active material layers after cold pressing treatment, also includes the actually measured thickness after the electrode plate is installed into the battery and subjected to a charge-discharge cycle, and can be tested by known methods in the art. For example, the test on the active material layers can be performed by using the ten-thousandth micrometer (such as Mitutoyo 293-100, with an accuracy of 0.1 µm).

In the present application, the thicknesses of the active ion transport layer and the active material layers are both within appropriate ranges, such that a favorable migration channel can be provided for active ions, thereby being conducive to transport of active ions; in addition, formation of an effective potential gradient is facilitated to achieve orderly migration and intercalation of active ions in the negative electrode, thereby improving the charging capability of the secondary battery.

In some implementations, the thickness ratio of the active ion transport layer to the active material layer adjacent to the active ion transport layer is (1:3) to (1:100). For example, the thickness ratio may be 1:5, 1:10, 1:20, 1:30, 1:40, 1:50, 1:60, 1:70, 1:80, 1:90 or a value falling within a range formed by any two of these values. Optionally, the thickness ratio is (1:5) to (1:50).

In the present application, controlling the thickness ratio of the active ion transport layer to the active material layer adjacent to the active ion transport layer within an appropriate range is conducive to forming an effective potential gradient. If the above thickness ratio is relatively small, the thickness of the active ion transport layer may be less than the thickness of the active material layers, such that an effective potential gradient may not be formed in the negative electrode plate. After active ions such as lithium-ions reach the surface of the negative electrode, orderly migration and intercalation of active ions in the negative electrode are hardly achieved, which makes it difficult to effectively improve the charging capability of the secondary battery. If the above thickness ratio is relatively large, the thickness of the active ion transport layer may be greater than the thickness of the active material layers, which is prone to a prolonged migration path for transport of active ions, and thus easily affects the charging capability of the battery.

In some implementations, the negative current collector has two opposite surfaces in the thickness direction thereof, and a negative film layer is arranged on either or both of the two opposite surfaces of the negative current collector.

In some implementations, metal foil or a composite current collector may be used as the negative current collector. For example, copper foil may be used as the metal foil. The composite current collector may include a polymer material substrate, and a metal layer formed on at least one surface of the polymer material substrate. The composite current collector may be formed by forming a metal material on the polymer material substrate, where the metal material includes but is not limited to copper, a copper alloy, nickel, a nickel alloy, titanium, a titanium alloy, silver, a silver alloy, etc. The polymer material substrate includes but is not limited to polypropylene (PP), polyethylene terephthalate (PET), polybutylene terephthalate (PBT), polystyrene (PS), polyethylene (PE), etc.

In some implementations, the negative film layer further optionally includes a binder. The binder may be selected from at least one of styrene-butadiene rubber (SBR), a polyacrylic acid (PAA), sodium polyacrylate (PAAS), polyacrylamide (PAM), polyvinyl alcohol (PVA), sodium alginate (SA), polymethacrylic acid (PMAA) and carboxymethyl chitosan (CMCS).

In some implementations, the active material layer further optionally includes a conductive agent. The conductive agent may be selected from at least one of super-conductive carbon, acetylene black, carbon black, ketjen black, carbon dots, carbon nanotubes, graphene and carbon nanofibers.

In some implementations, the active material layer further optionally includes other additives, such as a thickener (e.g., sodium carboxymethyl cellulose (CMC-Na)).

In some implementations, the negative electrode plate may be prepared by: dispersing the above components for preparing the active material layer, such as the negative active material, the conductive agent, the binder and any other components, in a solvent (such as deionized water) to form an active material slurry; dispersing the first electron insulating material and the binder in the solvent to form an electron insulating slurry; dispersing the second electron insulating material and the conductive filler in the solvent or dispersing the electron semi-insulating material in the solvent to form an electron semi-insulating slurry; and coating the negative current collector with the active material slurry for drying, then with the electron insulating slurry or the electron semi-insulating slurry for drying, and finally with the active material slurry again for drying, cold pressing and other procedures to obtain the negative electrode plate.

The negative electrode plate of the present application does not exclude additional functional layers in addition to the composite layer. For example, in some implementations, the negative electrode plate of the present application may further include a conductive undercoat layer (e.g., composed of a conductive agent and a binder), which is sandwiched between the negative current collector and the composite layer, and is arranged on the surface of the negative current collector. In some other implementations, the negative electrode plate of the present application may further include a protective layer, which covers the surface of the composite layer.

### Secondary battery

A third aspect of an implementation of the present application of the present application provides a secondary battery. The secondary battery includes any device in which an electrochemical reaction occurs to implement conversion between chemical energy and electrical energy, for example, a sodium-ion battery.

In some implementations, the secondary battery of the present application includes a positive electrode plate, a negative electrode plate, a separator and an electrolyte solution. In a charge-discharge process of the battery, active ions intercalate and deintercalate back and forth between the positive electrode plate and the negative electrode plate. An electrolyte plays a role in conducting ions between the positive electrode plate and the negative electrode plate. The separator is arranged between the positive electrode plate and the negative electrode plate, and mainly plays a role in preventing short circuits of positive and negative electrodes, and allows ions to pass.

### [Positive electrode plate]

The positive electrode plate includes a positive current collector and a positive film layer arranged on at least one surface of the positive current collector, where the positive film layer includes a positive active material. As an example, the positive current collector has two opposite surfaces in the thickness direction thereof, and the positive film layer is arranged on either or both of the two opposite surfaces of the positive current collector.

In some implementations, metal foil or a composite current collector can be used as the positive current collector. For example, aluminum foil can be used as the metal foil. The composite current collector may include a polymer material base layer, and a metal layer formed on at least one surface of the polymer material base layer. The composite current collector may be formed by forming a metal material on a polymer material substrate, where the metal material includes but is not limited to aluminum, an aluminum alloy, nickel, a nickel alloy, titanium, a titanium alloy, silver, a silver alloy, etc. The polymer material substrate includes polypropylene (PP), polyethylene terephthalate (PET), polybutylene terephthalate (PBT), polystyrene (PS), polyethylene (PE), etc.

In some implementations, a generally known positive active material for a battery in the art can be used as the positive active material. As an example, the positive active material may include at least one of the following materials: olivine-type lithium-containing phosphate and lithium transition metal oxide, and respective modified compounds thereof. However, the present application is not limited to these materials, and other traditional materials capable of being used as positive active materials for batteries can also be used. One of these positive active materials may be used alone, or two or more thereof may be used in combination. Examples of the lithium transition metal oxide may include but are not limited to at least one of lithium cobalt oxide (such as LiCoO₂), lithium nickel oxide (such as LiNiO₂), lithium manganese oxide (such as LiMnO₂ and LiMn₂O₄), lithium nickel cobalt oxide, lithium manganese cobalt oxide, lithium nickel manganese oxide, lithium nickel cobalt manganese oxide (such as LiNi_{1/3}Co_{1/3}Mn_{1/3}O₂ (also known as NCM333), LiNi_{0.5}Co_{0.2}Mn_{0.3}O₂ (also known as NCM523), LiNi_{0.5}Co_{0.25}Mn_{0.25}O₂ (also known as NCM211), LiNi_{0.6}Co_{0.2}Mn_{0.2}O₂ (also known as NCM622), and LiNi_{0.8}Co_{0.1}Mn_{0.1}O₂ (also known as NCM811)), lithium nickel cobalt aluminium oxide (such as LiNi_{0.85}Co_{0.15}Al_{0.05}O₂), and modified compounds thereof, etc. Examples of the olivine-type lithium-containing phosphate may include but are not limited to at least one of lithium iron phosphate (such as LiFePO₄ (also known as LFP)), a composite material of lithium iron phosphate and carbon, lithium manganese phosphate (such as LiMnPO₄), a composite material of lithium manganese phosphate and carbon, lithium manganese iron phosphate, and a composite material of lithium manganese iron phosphate and carbon.

In some implementations, the positive active material may also include at least one of the following materials: sodium transition metal oxide, a polyanionic compound and a Prussian blue compound. However, the present application is not limited to these materials, and other traditional materials capable of being used as positive active materials for batteries can also be used. One of these positive active materials may be used alone, or two or more thereof may be used in combination.

As an optional technical solution of the present application, in the sodium transition metal oxide, a transition metal may be at least one of Mn, Fe, Ni, Co, Cr, Cu, Ti, Zn, V, Zr and Ce. The sodium transition metal oxide is, for example, NaₓMO₂, where M includes one or more of Ti, V, Mn, Co, Ni, Fe, Cr and Cu, and 0 < x ≤ 1.

As an optional technical solution of the present application, the polyanionic compound may be a class of compounds having sodium-ions, transition metal ions and tetrahedral (YO₄)ⁿ⁻ anions. The transition metal may be at least one of Mn, Fe, Ni, Co, Cr, Cu, Ti, Zn, V, Zr and Ce; Y may be at least one of P, S and Si; and n represents the valence state of (YO₄)ⁿ⁻.

The polyanionic compound may also be a class of compounds having sodium-ions, transition metal ions, tetrahedral (YO₄)ⁿ⁻ anions and halogen anions. The transition metal includes at least one of Mn, Fe, Ni, Co, Cr, Cu, Ti, Zn, V, Zr and Ce; Y includes at least one of P, S and Si; and n represents the valence state of (YO₄)ⁿ⁻-; and a halogen includes at least one of F, Cl and Br.

The polyanionic compound may also be a class of compounds having sodium-ions, tetrahedral (YO₄)ⁿ⁻ anions, polyhedral units (ZO_{y})^{m+} and optional halogen anions. Y includes at least one of P, S and Si, and n represents the valence state of (YO₄)ⁿ⁻; Z represents a transition metal, and includes at least one of Mn, Fe, Ni, Co, Cr, Cu, Ti, Zn, V, Zr and Ce, and m represents the valence state of (ZO_{y})^{m+}; and the halogen includes at least one of F, Cl and Br.

The polyanionic compound is, for example, at least one of NaFePO₄, Na₃V₂(PO₄)₃ (sodium vanadium phosphate, known as NVP), Na₄Fe₃(PO₄)2(P₂O₇), NaM'PO₄F (M' including one or more of V, Fe, Mn and Ni) and Na₃(VOy)₂(PO4)₂F₃-_{2y} (0 ≤ y ≤ 1).

The Prussian blue compound may be a class of compounds having sodium-ions, transition metal ions and cyanide ions (CN⁻). The transition metal includes at least one of Mn, Fe, Ni, Co, Cr, Cu, Ti, Zn, V, Zr and Ce. The Prussian blue compound is, for example, NaₐMe_{b}Me'_{c}(CN)₆, where Me and Me' each independently include at least one of Ni, Cu, Fe, Mn, Co and Zn, 0 < a ≤ 2, 0 < b < 1, and 0 < c < 1.

In some implementations, the positive film layer further optionally includes a conductive agent. As an example, the conductive agent may include at least one of super-conductive carbon, acetylene black, carbon black, ketjen black, carbon dots, carbon nanotubes, graphene and carbon nanofibers.

In some implementations, the positive film layer further optionally includes a binder. As an example, the binder may include at least one of polyvinylidene fluoride (PVDF), polytetrafluoroethylene (PTFE), a vinylidene fluoride-tetrafluoroethylene-propylene terpolymer, a polyvinylidene fluoride-hexafluoropropylene-tetrafluoroethylene ternary copolymer, a tetrafluoroethylene-hexafluoropropylene copolymer and fluorine-containing acrylate resin.

The positive electrode plate in the present application can be prepared according to conventional methods in the art. For example, the positive film layer is usually formed by coating the positive current collector with a positive slurry, and performing drying and cold pressing. The positive slurry is usually formed by dispersing a positive electrode material, an optional conductive agent, an optional binder and any other components in a solvent and stirring same evenly. The solvent may be N-methyl-pyrrolidone (NMP), but is not limited thereto.

The positive electrode plate of the present application does not exclude additional functional layers in addition to the positive film layer. For example, in some implementations, the positive electrode plate of the present application further includes a conductive undercoat layer (e.g., composed of a conductive agent and a binder), which is sandwiched between the positive current collector and the positive film layer, and is arranged on the surface of the positive current collector. In some other implementations, the positive electrode plate of the present application further includes a protective layer which covers the surface of the positive film layer.

### [Negative electrode plate]

The negative electrode plate in the first aspect of the present application can be used as a negative electrode plate.

### [Electrolyte solution]

The electrolyte solution plays a role in conducting active ions between the positive electrode plate and the negative electrode plate. The electrolyte solution useful for the secondary battery of the present application may be an electrolyte solution known in the prior art.

In some implementations, the electrolyte solution includes an organic solvent, an electrolyte salt and an optional additive, of which the types are not specifically limited and can be selected as needed.

In some embodiments, as an example, the electrolyte salt may be a lithium salt which includes at least one of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI, LiN(FSO₂)₂), lithium bistrifluoromethanesulfonimide (LiN(CF₃SO₂)₂), lithium trifluoromethanesulfonate (CF₃SO₃Li), lithium difluorophosphate (LiPO₂F₂), lithium difluoro(oxalato)borate (LiDFOB, LiBC₂O₄F₂), lithium bis(oxalato)borate (LiBOB, LiB(C₂O₄)₂), lithium difluoro(bisoxalato)phosphate (LiDODFP, Li(C₂O₄)₂PF₂) and lithium tetrafluoro(oxalato)phosphate (LiOTFP, LiC₂O₄PF₄).

In some implementations, as an example, the electrolyte salt may also be a sodium salt which includes but is not limited to at least one of NaPF₆, NaClO₄, NaBCl₄, NaSO₃CF₃ and Na(CH₃)C₆H₄SO₃. One of the sodium salts may be used alone, or two or more thereof may be used simultaneously.

In some embodiments, as an example, the organic solvent includes but is not limited to at least one of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethylene propylene carbonate (EPC), butyl carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), methyl sulfonyl methane (MSM), ethyl methyl sulfone (EMS) and (ethylsulfonyl)ethane (ESE). One of these organic solvents may be used alone, or two or more thereof may be used simultaneously. Optionally, two or more of the above organic solvents are used simultaneously.

In some implementations, the additive may include a negative film-forming additive and a positive film-forming additive, and may further include an additive capable of improving certain performance of the battery, such as an additive that improves the overcharge performance of the battery, and an additive that improves the high-temperature or low-temperature performance of the battery.

As an example, the additive includes but is not limited to at least one of fluoroethylene carbonate (FEC), vinylene carbonate (VC), vinyl ethylene carbonate (VEC), ethylene sulfate (DTD), trimethylenesulfate, ethylene sulfite (ES), 1,3-propane sutone (PS), 1,3-propylene sultone (PST), sulfonate cyclic quaternary ammonium salt, succinic anhydride, succinonitrile (SN), adiponitrile (AND), tris(trimethylsilyl)phosphate (TMSP) and tris(trimethylsilyl) borate (TMSB).

The electrolyte solution can be prepared according to conventional methods in the art. For example, the organic solvent, the electrolyte salt and the optional additive may be mixed evenly to obtain the electrolyte solution. The sequence of adding various materials is not particularly limited. For example, the electrolyte salt and the optional additive are added to the organic solvent and mixed evenly to obtain the electrolyte solution; alternatively, the electrolyte salt is added to the organic solvent before the optional additive is added to the organic solvent, and the resulting mixture is mixed evenly to obtain the electrolyte solution.

### [Separator]

The separator is arranged between the positive electrode plate and the negative electrode plate, and mainly plays a role in preventing short circuits of positive and negative electrodes, and allows passage of active ions. The type of the separator is not particularly limited in the present application, and any generally known separator with a porous structure having good chemical stability and mechanical stability can be used.

In some implementations, the material of the separator may be selected from one or more of glass fiber, non-woven fabric, polyethylene, polypropylene and polyvinylidene fluoride, but is not limited thereto. The separator may be a single-layer thin film or a multi-layer composite thin film. When the separator is a multi-layer composite thin film, the materials of layers may be the same or different. In some embodiments, an organic/inorganic composite coating, including a ceramic particle coating and a metal oxide coating, may further be arranged on the separator.

In some implementations, the positive electrode plate, the negative electrode plate and the separator may be made into an electrode assembly by means of a winding process or a stacking process.

In some implementations, the secondary battery may include an outer packaging. The outer packaging may be used to package the electrode assembly and the electrolyte.

In some implementations, the outer packaging of the secondary battery may be a hard shell, such as a hard plastic shell, an aluminum shell and a steel shell. The outer packaging of the secondary battery may also be a soft packaging, such as a bag-type soft packaging. The material of the soft packaging may be plastic, such as one or more of polypropylene (PP), polybutylene terephthalate (PBT), polybutylene succinate (PBS), etc.

The shape of a secondary battery cell is not particularly limited in the present application, and may be a cylinder, a square or any other shapes. A secondary battery 5 with a square structure is shown as an example in FIG. 2.

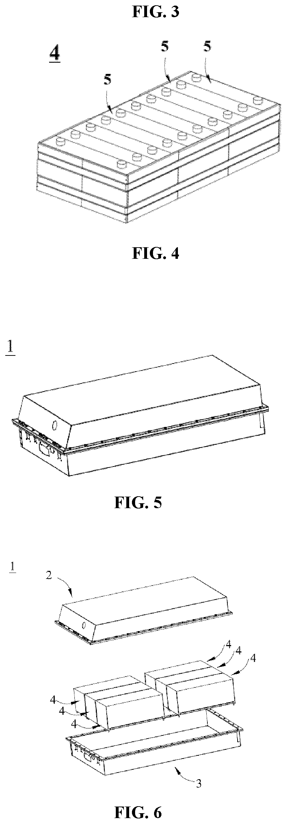

In some implementations, referring to FIG. 3, the outer packaging may include a housing 51 and a cover plate 53, where the housing 51 may include a bottom plate and side plates connected to the bottom plate, and the bottom plate and the side plates are enclosed to form an accommodation cavity. The housing 51 has an opening which is in communication with the accommodating cavity, and the cover plate 53 is used for covering the opening to close the accommodating cavity. The positive electrode plate, the negative electrode plate and the separator can be made into an electrode assembly 52 by means of a winding process or a stacking process. The electrode assembly 52 is packaged in the accommodating cavity. The electrode assembly 52 is infiltrated in the electrolyte solution. The secondary battery 5 may include one or more electrode assemblies 52, which may be adjusted according to requirements.

In some implementations, the secondary battery may also be a battery module formed by assembling a plurality of battery cells, the battery module may include a plurality of secondary battery cells, and the specific number of the secondary battery cells may be adjusted according to the application and capacity of the battery module.

A battery module 4 is shown as an example in FIG. 4. Referring to FIG. 4, in the battery module 4, the plurality of secondary battery cells 5 may be sequentially arranged in a length direction of the battery module 4, and definitely, may also be arranged in any other ways. Further, the plurality of secondary battery cells 5 may be fixed by fasteners.

Optionally, the battery module 4 may also include a shell having an accommodating space, and the plurality of secondary battery cells 5 are accommodated in the accommodating space.

In some implementations, the battery module may be assembled into a battery pack. The quantity of the battery modules contained in a battery pack may be adjusted according to the application requirements and the capacity of the battery pack.

In some implementations, the battery cells may be directly assembled to form a battery pack. The number of battery cells included in a battery pack may be adjusted according to the application requirements and capacity of the battery pack.

A battery pack 1 is shown as an example in FIG. 5 and IFG. 6. Referring to FIG. 5 and FIG. 6, the battery pack 1 may include a battery box and a plurality of battery modules 4 arranged in the battery box. The battery box includes an upper box body 2 and a lower box body 3, where the upper box body 2 is used for covering the lower box body 3 and forming a closed space for accommodating the battery modules 4. The plurality of battery modules 4 may be arranged in the battery box in any way.

### Electrical device

A fifth aspect of an implementation of the present application provides an electrical device. The device includes at least one of the secondary battery, the battery module or the battery pack of the present application. The secondary battery, the battery module or the battery pack may serve as a power supply of the device, and may also serve as an energy storage unit of the device. The device may be, but is not limited to, a mobile apparatus, an electric vehicle, an electric train, ship and satellite, an energy storage system, etc. For example, the device may be a notebook computer, pen-inputting computer, mobile computer, e-book player, portable phone, portable fax machine, portable photocopier, portable printer, head-mounted stereo headset, video recorder, liquid crystal display television set, handheld cleaner, portable CD player, mini CD-ROM, transceiver, electronic notepad, calculator, memory card, portable voice recorder, radio, backup power supply, electric motor, automobile, motorcycle, power-assisted bicycle, bicycle, lighting appliance, toy, game console, watch, electric tool, flashlight, camera, large household storage battery, etc.

The secondary battery, the battery module or the battery pack may be selected for the device according to the use requirements thereof.

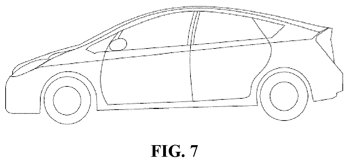

A device is shown as an example in FIG. 7. The device is a pure electric vehicle, a hybrid electric vehicle, a plug-in hybrid electric vehicle or the like. In order to meet the requirements of the device for high power and high energy density, the battery pack or the battery module can be used.

### Embodiments

The following embodiments describe the content disclosed in the present invention more specifically, and these embodiments are used only for exemplary illustration, since performing various modifications and variations within the scope of the content disclosed in the present invention would have been obvious to a person skilled in the art. Unless otherwise stated, all parts, percentages and ratios reported in the following embodiments are based on mass; all reagents used in the embodiments are commercially available or synthesized according to conventional methods, and can be used directly without further treatment; and all instruments used in the embodiments are commercially available.

### Embodiment 1

### Preparation of negative electrode plate

Add graphite as a negative active material, conductive carbon as a conductive agent, sodium carboxymethyl cellulose (CMC) as a thickener and styrene-butadiene rubber (SBR) as a binder to water as a solvent at a mass ratio of 96:2:1:1, and mix same evenly into an active material slurry. Evenly mix Al₂O₃ and conductive carbon black at a mass ratio of 98:2 to obtain an active ion transport slurry. Evenly coat copper foil as a negative current collector with the active material slurry for drying at 85 °C, then with the active ion transport slurry for drying at 85 °C, and finally with an upper layer of active material slurry for drying at 85 °C and cold pressing to obtain a negative electrode plate.

### Preparation of positive electrode plate

Evenly mix a ternary nickel cobalt manganese oxide material (NCM811) as a positive active material, conductive carbon black as a conductive agent and polyvinylidene fluoride (PVDF) as a binder at a mass ratio of 97:2:1 and add same to NMP as a solvent to obtain a positive electrode slurry; and evenly coat aluminum foil as a positive current collector with the positive electrode slurry for drying at 85 °C and subsequent cold pressing followed by die-cutting and slitting to obtain a positive electrode plate.

### Preparation of electrolyte solution

Dissolve lithium hexafluorophosphate in a mixed solvent of ethylene carbonate, dimethyl carbonate and ethyl methyl carbonate to prepare an electrolyte solution with a lithium hexafluorophosphate concentration of 1 mol/L, where the volume ratio of the ethylene carbonate, the dimethyl carbonate to the methyl ethyl carbonate is 1:2:1.

### Preparation of separator

By using a microporous thin film made of polyethylene as a porous separator substrate, evenly mix inorganic aluminum oxide powder, polyvinylpyrrolidone and an acetone solvent at a weight ratio of 3:1.5:5.5 into a slurry, coat one surface of the substrate with the slurry and dry same to obtain a separator.

### Preparation of conventional lithium-ion battery

Stack the positive electrode plate, the negative electrode plate and the separator described above to obtain a battery cell, and then prepare a conventional lithium-ion battery through procedures such as packaging, filling, formation and exhaust, such that the battery is designed to be charged as per N/P=1.05, where N is the capacity of a negative electrode during charging, and P is the capacity of a positive electrode in a charged state; it is necessary to ensure N/P > 1, so as to ensure that the negative electrode has sufficient active sites for accommodating lithium-ions that deintercalate from the positive electrode, thereby reducing the risk of plating of metallic lithium; and the design capacity of the battery cell is 146 mAh.

### Preparation of three-electrode lithium-ion battery

Prepare a copper wire and attach same to a separator, sequentially stack a positive electrode plate, the separator with the copper wire, a separator, a negative electrode plate, a separator and a positive electrode plate to obtain a three-electrode battery cell, and then prepare a three-electrode lithium-ion battery through procedures such as packaging, filling, formation and exhaust. Weld the copper wire to a nickel sheet, and perform charging with a constant current of 30 µA for 2 h to obtain a lithium-plated copper wire, which is used as a third electrode.

### Embodiments 2 to 32

The preparation methods for the conventional lithium-ion battery and the three-electrode lithium-ion battery are similar to those in Embodiment 1 except that parameters related to the negative electrode plate and a preparation process thereof are adjusted. For specific parameters, see Table 1 below for details. In the table, "/" indicates that the corresponding parameter is not available.

In Embodiment 28, the mass ratio of PEO to Li₂S is 6:4; in Embodiment 31, the mass ratio of LTO to Si is 2:8; and in Embodiment 32, the mass ratio of LLZO to Al₂O₃ is 5:5.

### Comparative Embodiment 1

Comparative Embodiment 1 is similar to Embodiment 1 except that the active ion transport layer is removed from the negative electrode plate.

### Comparativ Embodiment 2

Comparative Embodiment 2 is similar to Embodiment 1 except that the active ion transport layer is removed from the negative electrode plate, and there is only one active material layer.

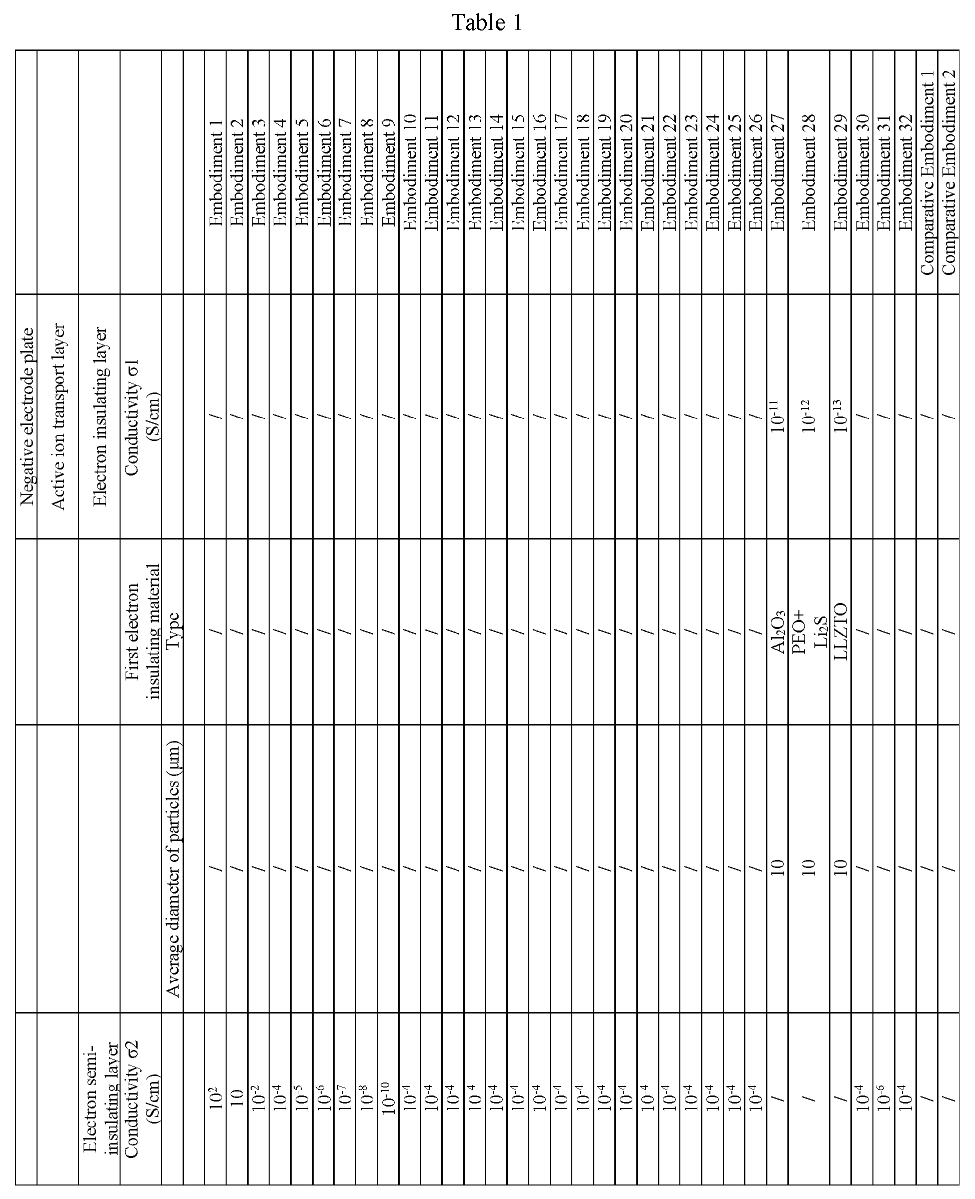

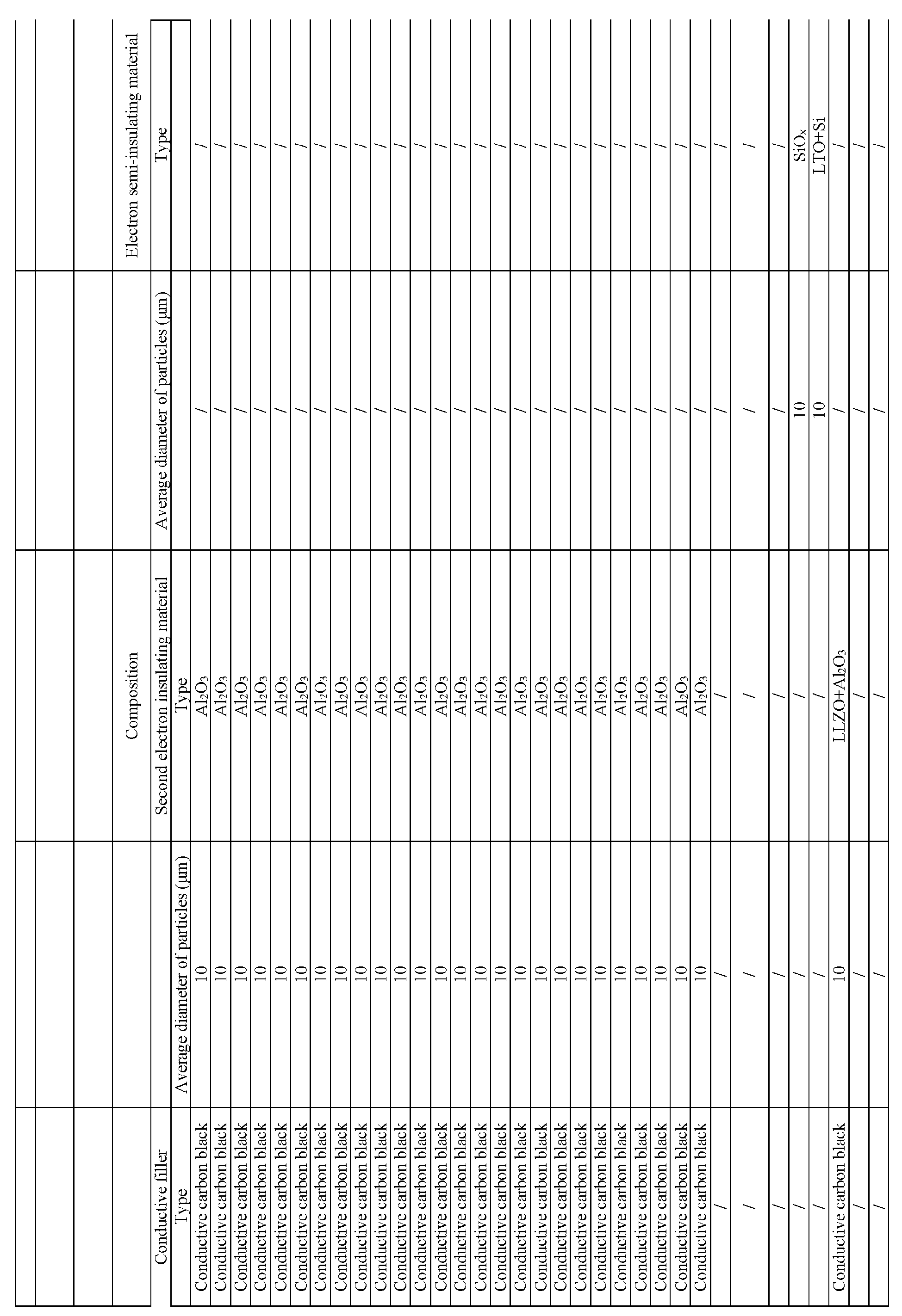

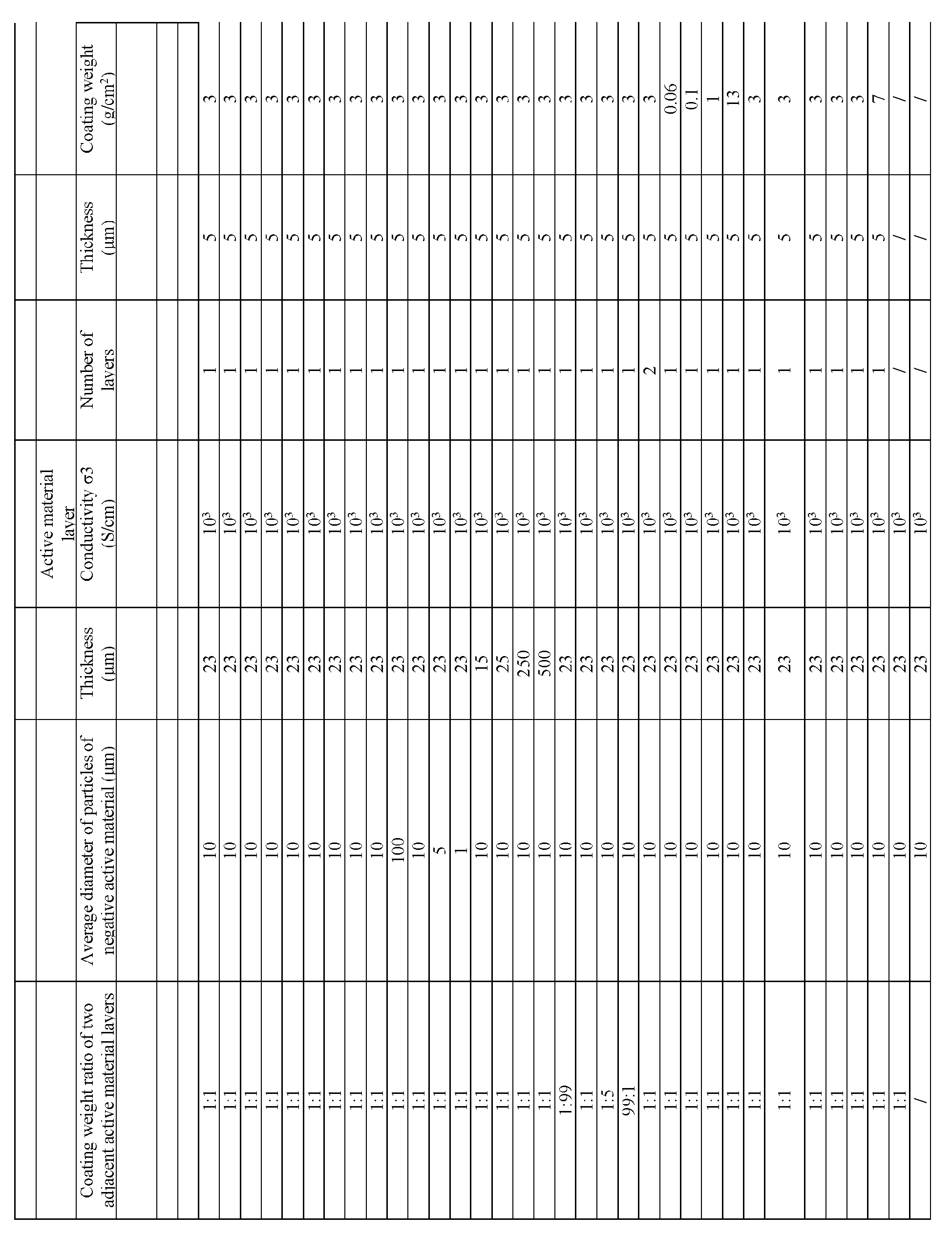

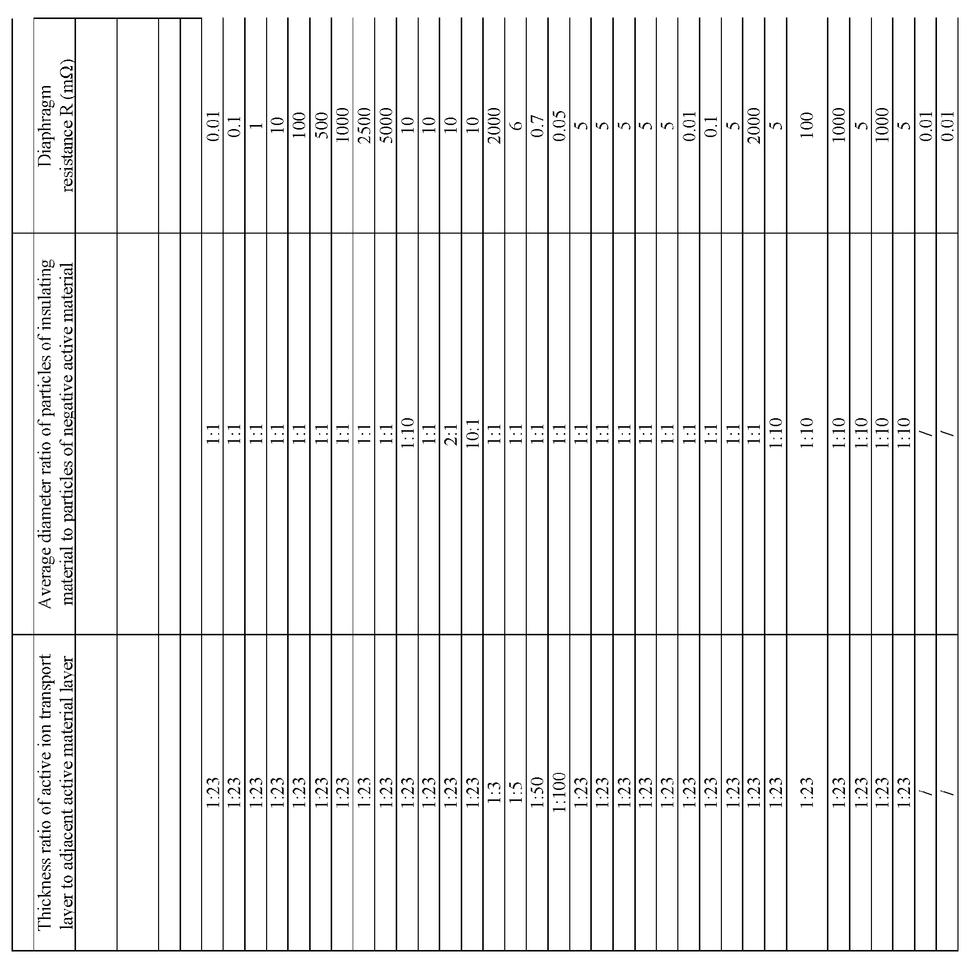

### Tests

### (1) Charching capability test of lithium-ion battery

The test samples are three-electrode lithium-ion batteries; the test temperature is 25̊ C; the charge-discharge voltage range is 2.5 V to 4.25 V; and the protection voltage is 2.45 V to 4.3 V. The test process is as follow: firstly, calibrate the capacity; according to the calibrated capacity,test the test samples at different charging rates to obtain their charging curves, and by using an enf-of-charge voltage 4.25 V, a negative potential for monitoring (charging can be stopped in advance when the negative potential is lower than -10 mV) and test charging rates of 0.33 C, 0.5 C, 1 C, 1.5 C, 2 C, 2.5 C respectly, futher obtain a maximum allowable charging rate curve of the test samples under different SOCs; and acording to this curve, calculate the time required for charging the batteries within a range of 10% SOC to 80% SOC, so as to evaluate the charging capability of the samples. Generally, the less the time required for charging, the greater the charging capability.

### (2) Safety performance test of lithium-ion battery

The test samples are conventional lithium-ion batteries; the test temperature is 10 °C; the charge-discharge voltage range is 2.5 V to 4.25 V; the protection voltage range is 2.45 V to 4.3 V; and the charge-discharge rate is 1 C. Through the test, an intercalation/deintercalation process of active ions in a negative electrode and metallic lithium plating in the charge-discharge process are observed by using an in-situ optical microscope; and the safety of the batteries is judged according to the plating time of metallic lithium.

Attach a positive electrode plate and a negative electrode plate to two opposite sides of a cuvette respectively; inject an appropriate amount of an electrolyte solution into the cuvette until the positive and negative electrode plates are immersed in the solution; lead out the positive and negative electrode plates by means of a silver wire; after covering with caps and proper sealing, connect positive and negative electrodes to an electrochemical test system (Land CT2001A from Wuhan Land Electronics); conduct a charging test under the conditions described above; and observe the plating time of metallic lithium on a negative electrode side in real time under the optical microscope.

Table 2 gives performance test results of Embodiments 1 to 32 and Comparative Embodiments 1 to 2.

**Table 2**

| | Charging time within a range of 10% SOC-80% SOC (min) | Plating time of metallic lithium (h) |
|---|---|---|
| Embodiment 1 | 46.1 | 1.5 |
| Embodiment 2 | 45.8 | 5.5 |
| Embodiment 3 | 35.1 | 37.0 |
| Embodiment 4 | 30.5 | 41.9 |
| Embodiment 5 | 36.3 | 35.2 |
| Embodiment 6 | 38.8 | 33.6 |
| Embodiment 7 | 39.0 | 27.0 |
| Embodiment 8 | 42.1 | 5.1 |
| Embodiment 9 | 46.0 | 1.8 |
| Embodiment 10 | 45.5 | 5.9 |
| Embodiment 11 | 30.9 | 41.2 |
| Embodiment 12 | 35.1 | 37.2 |
| Embodiment 13 | 40.7 | 27.0 |
| Embodiment 14 | 45.1 | 5.1 |
| Embodiment 15 | 31.5 | 41.4 |
| Embodiment 16 | 35.2 | 35.9 |
| Embodiment 17 | 43.2 | 3.2 |
| Embodiment 18 | 42.6 | 7.3 |
| Embodiment 19 | 30.7 | 41.5 |
| Embodiment 20 | 39.6 | 29.1 |
| Embodiment 21 | 43.1 | 3.7 |
| Embodiment 22 | 32.7 | 41.2 |
| Embodiment 23 | 46.0 | 1.8 |
| Embodiment 24 | 45.1 | 3.1 |
| Embodiment 25 | 32.1 | 43.2 |
| Embodiment 26 | 45.9 | 7.5 |
| Embodiment 27 | 31.7 | 39.7 |
| Embodiment 28 | 37.3 | 27.9 |
| Embodiment 29 | 39.6 | 17.4 |
| Embodiment 30 | 35.1 | 37.1 |
| Embodiment 31 | 40.2 | 29.5 |
| Embodiment 32 | 32.7 | 41.3 |
| Comparative Embodiment 1 | 47.0 | 1.0 |
| Comparative Embodiment 2 | 47.0 | 1.0 |

**It** can be seen from comparative analysis on Embodiments 1 to 32 and Comparative Embodiments 1 and 2 that, compared to the negative electrode plate without the active ion transport layer in Comparative Embodiments 1 and 2, the charging time within a range of 10% SOC-80% SOC in Embodiments 1 to 32 is obviously less, which suggests the negative electrode plate with the active ion transport layer provided in the present application can improve the charging capability of the battery. In addition, compared to Comparative Embodiments 1 and 2, the plating time of metallic lithium in Embodiments 1 to 32 is apparently prolonged, which suggests the negative electrode plate with the active ion transport layer provided in the present application can simultaneously improve the safety performance of the battery.

Various technical features of the foregoing embodiments may be combined arbitrarily, and all possible combinations of the various technical features of the foregoing embodiments have not been described for the sake of concise description; however, as long as there is no conflict in the combinations of these technical features, they shall all be regarded as falling within the scope of this specification.

What is described above is merely the specific implementations of the present application, and the protection scope of the present application is not limited thereto. Any person skilled in the art can easily conceive of various equivalent modifications or substitutions within the technical scope disclosed in the present application, and these modifications or substitutions should all fall within the protection scope of the present application. Therefore, the protection scope of the present application should follow the protection scope of the claims, and the description and accompanying drawings can be used for explaining the protection scope of the claims.

## Claims

1. A negative electrode plate, comprising:
a negative current collector; and
a composite layer arranged on at least one side of the negative current collector, the composite layer including at least two active material layers and at least one active ion transport layer which are stacked, where the active material layers and the active ion transport layers are arranged alternately; the active ion transport layer is located between two adjacent active material layers; and each active ion transport layer independently includes one of an electron insulating layer and an electron semi-insulating layer.

2. The negative electrode plate according to claim 1, wherein the active ion transport layer satisfies at least one of the following conditions:
(1) conductivity of the electron insulating layer is σ1, and σ1 satisfies: 0 < σ1 < 10⁻¹⁰ S/cm, and optionally 10⁻¹⁵ S/cm ≤ σ1 ≤ 10⁻¹¹ S/cm; and
(2) conductivity of the electron semi-insulating layer is σ2, and σ2 satisfies: 10⁻¹⁰ S/cm ≤ σ2 ≤ 10² S/cm, and optionally 10⁻⁶ S/cm ≤ σ2 ≤ 10⁻³ S/cm.

3. The negative electrode plate according to claim 1 or 2, wherein the negative electrode plate satisfies at least one of the following conditions:
(1) conductivity of the active material layer is σ3, and σ3 satisfies: 10⁻⁶ S/cm ≤ σ3 ≤ 10⁵ S/cm, and optionally 10⁻⁴ S/cm ≤ σ3 ≤ 10³ S/cm; and
(2) diaphragm resistance of the negative electrode plate is R, and R satisfies: 0.1 mΩ ≤ R ≤ 5000 mΩ, and optionally 1 mΩ ≤ R ≤ 1000 mΩ.

4. The negative electrode plate according to any one of claims 1-3, wherein the electron insulating layer contains a first electron insulating material, and the first electron insulating material satisfies at least one of the following conditions:
(1) an average diameter of particles of the first electron insulating material is 0.1 µm to 50 µm, and optionally 1 µm to 20 µm; and
(2) a mass proportion of the first electron insulating material in the electron insulating layer is 70% to 100%, and optionally 90% to 99.9%.

5. The negative electrode plate according to claim 4, wherein the first electron insulating material comprises a first solid electrolyte,
optionally, the first solid electrolyte comprises a sulfide electrolyte, an oxide electrolyte, a polymer electrolyte or a combination thereof, and
further optionally, the first solid electrolyte includes LLZO, LLZTO, aluminum oxide, polyethylene oxide, lithium sulfide or a combination thereof.

6. The negative electrode plate according to any one of claims 1 to 5, wherein the electron semi-insulating layer contains an electron semi-insulating material and/or a composition of a second electron insulating material and a conductive filler, and optionally, the second electron insulating material includes a second solid electrolyte.

7. The negative electrode plate according to claim 6, wherein the electron semi-insulating layer satisfies at least one of the following conditions:
(1) the electron semi-insulating material includes lithium titanate, silicon, sulfur, silicon oxide or a combination thereof;
(2) an average diameter of particles of the electron semi-insulating material is 0.1 µm to 50 µm, and optionally 1 µm to 20 µm;
(3) the second solid electrolyte includes a sulfide electrolyte, an oxide electrolyte, a polymer electrolyte or a combination thereof, and
optionally, the second solid electrolyte includes LLZO, LLZTO, aluminum oxide, polyethylene oxide, lithium sulfide or a combination thereof;
(4) an average diameter of particles of the second electron insulating material is 0.1 µm to 50 µm, and optionally 1 µm to 20 µm; and
(5) the conductive filler includes super-conductive carbon, acetylene black, carbon black, ketjen black, carbon dots, carbon nanotubes, graphene, carbon nanofibers or a combination thereof, and
optionally, a mass proportion of the conductive filler in the composition is 0.1% to 50%, and optionally 0.5% to 30%.

8. The negative electrode plate according to claim 6 or 7, wherein the electron semi-insulating layer contains the electron semi-insulating material, and a mass proportion of the electron semi-insulating material in the electron semi-insulating layer is 70% to 100%, and optionally 90% to 99.9%.

9. The negative electrode plate according to claim 6 or 7, wherein the electron semi-insulating layer contains the composition, and a mass proportion of the composition in the electron semi-insulating layer is 70% to 100%, and optionally 90% to 99.9%.

10. The negative electrode plate according to claim 6 or 7, wherein the electron semi-insulating layer contains the electron semi-insulating material and the composition, and a total mass proportion of the electron semi-insulating material and the composition in the electron semi-insulating layer is 70% to 100%, and optionally 90% to 99.9%.

11. The negative electrode plate according to any one of claims 1 to 10, wherein the active material layer contains a negative active material, and the negative active material satisfies at least one of the following conditions:
(1) the negative active material includes artificial graphite, natural graphite, soft carbon, hard carbon, a silicon-based material, a tin-based material, lithium titanate or a combination thereof, and
optionally, the silicon-based material includes one or more of elemental silicon, a silicon-oxygen compound, a silicon-carbon compound, a silicon-nitrogen compound and a silicon alloy, and the tin-based material includes elemental tin, a tin-oxygen compound, a tin alloy or a combination thereof; and
(2) an average diameter of particles of the negative active material is 1 µm to 100 µm, and optionally 2 µm to 50 µm.

12. The negative electrode plate according to claim 11, wherein the negative electrode plate satisfies at least one of the following conditions:
(1) an average diameter ratio of particles of the first electron insulating material to particles of the negative active material is (1:50) to (50:1), and optionally (1:10) to (10:1);
(2) an average diameter ratio of particles of the second electron insulating material to particles of the negative active material is (1:50) to (50:1), and optionally (1:10) to (10:1); and
(3) an average diameter ratio of particles of the electron semi-insulating material to particles of the negative active material is (1:50) to (50:1), and optionally (1:10) to (10:1).

13. The negative electrode plate according to any one of claim 1 to 12, wherein the composite layer satisfies at least one of the following conditions:
(1) a coating weight of the active ion transport layer is 0.06 mg/cm² to 13 mg/cm², and optionally 0.1 mg/cm² to 7 mg/cm²; and
(2) a coating weight of the active material layers is 0.06 mg/cm² to 65 mg/cm², and optionally 0.13 mg/cm² to 26 mg/cm².

14. The negative electrode plate according to any one of claim 1 to 13, wherein a coating weight ratio of two active material layers located on two opposite sides of the active ion transport layer and adjacent to the active ion transport layer is (1:99) to (99:1), and optionally (5:90) to (90:5).

15. The negative electrode plate according to any one of claim 1 to 14, wherein the composite layer satisfies at least one of the following conditions:
(1) a thickness of the active ion transport layer is 0.2 µm to 50 µm, and optionally 1 µm to 20 µm; and
(2) a thickness of the active material layers is 1 µm to 500 µm, and optionally 10 µm to 300 µm.

16. The negative electrode plate according to any one of claim 1 to 15, wherein a thickness ratio of the active ion transport layer to the active material layer adjacent to the active ion transport layer is (1:3) to (1:100), and optionally (1:5) to (1:50).

17. A secondary battery, comprising the negative electrode plate according to any one of claims 1 to 16.

18. An electrical device, comprising the secondary battery according to claim 17.
